# EUROPEAN PATENT SPECIFICATION

(11) **EP 1 617 333 B1**
(45) Date of publication and mention of the grant of the patent: **04.01.2012**
(21) Application number: 04728631.5
(22) Date of filing: 21.04.2004
(51) Int. Cl.: G06F 13/00

(54) **VIDEO DEVICE, VIDEO MODULE UNIT, AND VIDEO DEVICE OPERATION METHOD**
VIDEOEINRICHTUNG, VIDEOMODULEINHEIT UND VIDEOEINRICHTUNGS-BETRIEBSVERFAHREN
DISPOSITIF VIDEO, UNITE A MODULE VIDEO, ET PROCEDE D'EXPLOITATION DU DISPOSITIF VIDEO

(30) Priority: 24.04.2003 JP 2003119563; 24.04.2003 JP 2003119564; 24.04.2003 JP 2003119562; 24.04.2003 JP 2003119565
(43) Date of publication of application: 18.01.2006
(73) Proprietor: MITSUBISHI DENKI KABUSHIKI KAISHA, Chiyoda-ku Tokyo 100-8310 (JP)
(72) Inventor: YOSHIMOTO, Kyosuke, c/o Mitsubishi Denki K. K., Tokyo 100-8310 (JP); MURAKAMI, Tokumichi, c/o Mitsubishi Denki K. K., Tokyo 100-8310 (JP); MORITA, Chihiro, c/o Mitsubishi Denki Kabushiki K., Tokyo 100-8310 (JP); MIZUTANI, Yoshiki, c/o Mitsubishi Denki K. K., Tokyo 100-8310 (JP); HIRASAWA, Kazuo, c/o Mitsubishi Denki Kabushiki K., Tokyo 100-8310 (JP); MAEDA, Yasuo, c/o Mitsubishi Denki Kabushiki K., Tokyo 100-8310 (JP); YOSHINAGA, Mitsunobu, c/o Mitsubishi Denki K. K., Tokyo 100-8310 (JP); ISHIDA, Kozo, c/o Mitsubishi Denki Kabushiki K., Tokyo 100-8310 (JP)
(74) Representative: Whitlock, Holly Elizabeth Ann
(86) International application number: PCT/JP2004/005676
(87) International publication number: WO 2004/095293

(56) References cited:
- EP-A- 1 058 422
- EP-A- 1 286 501
- WO-A-02/09384
- JP-A- 2003 046 535
- US-B1- 6 353 864
- BAE C. ET AL.: 'Multimedia data processing elements for digital TV and multimedia services in home server platform' IEEE TRANS. ON CONSUMER ELECTRONICS vol. 49, no. 1, February 2003, pages 64 - 70, XP001157976
- FUKUSHIMA ET AL.: 'PC o riyo shita havi taio kaden no kochiku' INFORMATION PROCESSING SOCIETY OF JAPAN COMPUTER SYSTEM . SYMPOSIUM KOEN RONBUNSHU 15 November 2000, pages 1 - 8, XP002987021

## Description

### Technical Field

The present invention relates to a ubiquitous (ubiquitous) image module which can be connected from a LAN of a small-scale network to the Internet of a large-scale network, can be attached to various types of machines and systems of from a household equipment such as a digital television or a DVD/HDD recorder to a business equipment such as a recorder of a monitor system or an FA equipment, and is excellent in operationality, a ubiquitous image module unit formed of the ubiquitous image module as a core (central core), and an image equipment which can be equipped with the ubiquitous image module, such as an image information apparatus, an image recording apparatus or a cellular phone apparatus.

### Background Art

A conventional AV (Audio Visual) digital network equipment is such that for example, as disclosed in patent document 1, one equipment includes an interface for network connection and a function for connection to a network.

Besides, for example, as disclosed in patent document 2, there is also one in which a function relating to a network is realized by a system LSI.

In recent years, because of a reduction in cost and improvement in function of a personal computer, increase in Internet content, and diversification of network connection equipment such as a cellular phone or a PDA (Personal Digital Assistant; electronic notebook), the opportunity of using a local LAN or the Internet is increased even in ordinary housholds.

Besides, also from the viewpoint of standards such as HAVi (Home Audio/Video interoperability: specifications of software used at the time when home AV equipment is connected to a network) or ECHONET, preparation for connecting household electrical appliances to a network has been advanced.

In an image information apparatus, such as a television of a digital network equipment or a VTR, disclosed in patent document 1, a dedicated system LSI (system LSI 208) as shown in Fig. 44 is generally developed and is used.

The system LSI 208 includes a SYS-CPU 201 for controlling a system, a logical part (hereinafter referred to as a "logic part" (Logic)) of an image signal processing part VSP (Video Signal Processor) 202 for performing an image signal processing, and a memory part of a ROM 203 and a RAM 204.

In the logic part of the image signal processing part VSP 202, a necessary function is designed according to the specifications of the image information apparatus which uses this system LSI.

In the case where this function is general-purpose and there is an intellectual property (Intellectual Property) of a maker, shortening in a development period and reduction in cost are attempted by using this intellectual property.

Incidentally, the intellectual property means a logical circuit already designed in the case of LSI design.

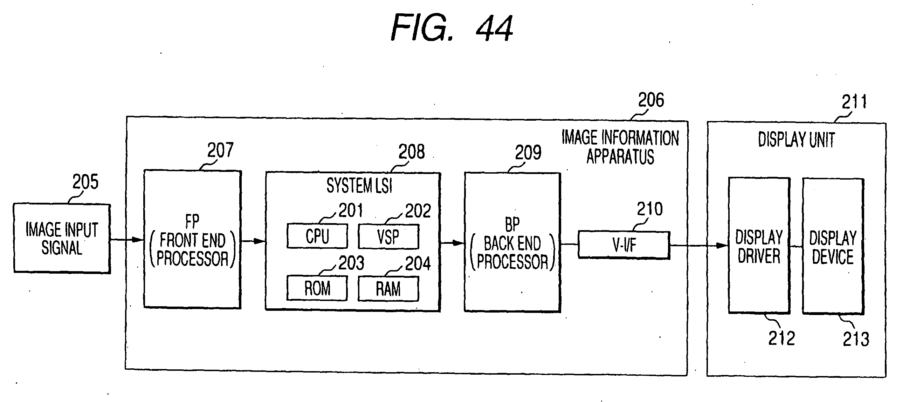

Fig. 44 is a block diagram conceptually showing an example of the conventional image processing apparatus using the system LSI 208.

An image input signal 205 is converted by an image information device 206 into a signal which can be displayed by a display unit 211 and is outputted.

The image information device 206 includes the system LSI 208, a front end processing part (Front end Processor, hereinafter referred to as an "FP") of the system LSI, a back end processing part (Back end Processor, hereinafter referred to as a "BP") 209 of the system LSI 208, and a video interface (hereinafter referred to as a "V-I/F) 210.

Here, in the case where the image input signal 205 is an analog signal, the FP 107 has functions of A/D conversion, general-purpose decoder (Decoder), and the like.

Besides, the BP 209 has a structure with the function of only an output buffer.

However, according to the design concept of the system LSI 208 and the structure of the system, the FP and the BP have various structures.

Besides, in the semiconductor charge collection of a network connection disclosed in patent document 2, an equipment has a network equipment control part, so that a structure in which a network connection is possible is realized.

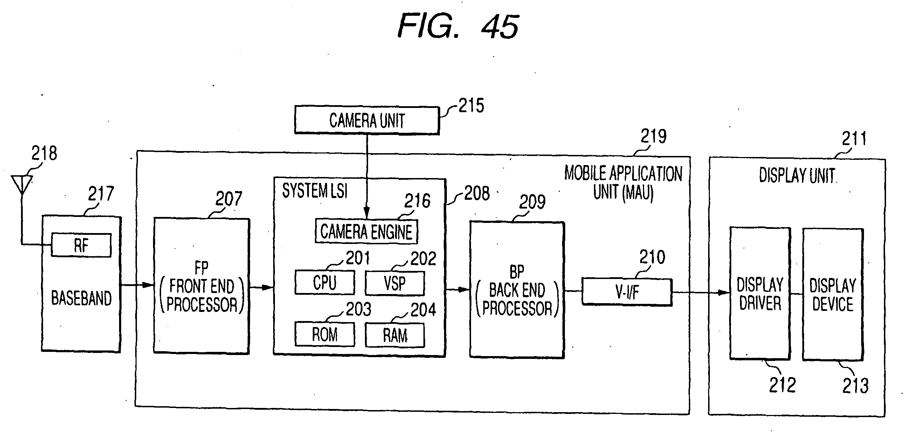

Further, Fig. 45 is a system structural view conceptually showing an example of a conventional cellular phone apparatus using a system LSI 208. In the drawing, data inputted from a not-shown cellular phone wireless network through an antenna 218 is signal processed by a baseband part 217, communication header information is removed, and it is reconstructed. Further, it is converted by a mobile application unit 219 into a signal form which can be displayed on a display unit 211, and is outputted to the display unit 211. Of course, although there is also a structural block relating to input/output of sound, the illustration is omitted here, and also in the following description, the processing of image information will be mainly described.

The mobile application unit 219 includes the system LSI 208, an FP 207 of the system LSI 208, a BP 209, and a V-I/F 210.

The data inputted to the mobile application unit 219 is decoded and resized by the software of a CPU 201 and the hardware of a VSP 202, and is displayed on the display unit 211.

Besides, data inputted from a camera unit 215 connected to the outside to the mobile application unit 219 is data processed by a camera engine 216, and is reconstructed by the CPU 201 and the VSP 202 into picture data, and there is a case where it is further displayed on the display unit 211, a case where it is further compression-processed and is stored in a nonvolatile memory such as a flash memory, or a case where it is further multiplexed and is transmitted from the baseband part 217 to the not-shown wireless network.

In the conventional image information equipment design, in the case where a network function is newly added to the image information equipment, the function is added to the system LSI according to new specifications, or a new system LSI is developed, and reliability verification, EMI (Electro Magnetic Interference : electromagnetic interference) verification and the like are performed.

Thus, each time the specifications of the equipment are changed, the development cost and development period have been required.

Besides, in the case where the specifications are not changed, there is a possibility that business chance is lost in a machine in which an obsolete system LSI is mounted.

Besides, in the field of cellular phones in which the cycle of new product introduction is short, and the number of models are enormous, installed functions of the respective models are different from one another, and each time a dedicated system LSI satisfying use requirements is developed and changed, the installed function varies in each model. Accordingly, each time the dedicated system LSI satisfying the required specifications is developed/changed, it is necessary to repeat operations identical to the new development of the whole cellular phone apparatus, such as print board change/software change of the cellular phone apparatus, reliability verification and EMI verification, and after all, there has been a problem that the development cost is raised and the development period becomes long.
Patent document 1: JP-A-2002-16619 (Fig. 1, column 0009)
Patent document 2: JP-A-2002-230429 (Fig. 2, paragraph 0028 to paragraph 0032)

The invention has been made in order to solve the foregoing problems, and has an object to provide an image equipment in which even if specifications/functions required for the equipment are changed, it is not necessary to newly develop a system LSI meeting the request for the specification/function change, and the expansion and change of the function can be easily performed.

EP 1 286 501 discusses a method for bridging a HAVi network and a UPnP network, in which both networks are connected to a bridge device representing software elements from one network on the other network. The method involves detecting UPnP devices connected to the UPnP network, creating a proxy HAVi device control module for each UPnP device for representing the UPnP devices on the HAVi network, and registering the proxy HAVi device control modules, wherein the proxy HAVi device control modules (8) are declared as being of the legacy device type.

EP 1 058 422 discusses another method for bridging a HAVi sub-network and a UPnP sub-network. For making UPnP devices available to the HAVi sub-network, the following steps are implemented: discovering UPnP devices and/or services on the UPnP sub-network and corresponding to a selection criterion; declaration, by a sub-network bridging device, of each discovered UPnP device as a HAVi DCM and of each discovered UPnP service as a HAVi FCM on the HAVi sub-network. For making HAVi devices available to the UPnP sub-network, the following steps are implemented: discovering HAVi software elements of the HAVi sub-network corresponding to a selection criterion; representing, in a sub-network bridging device, each of said discovered elements by a UPnP proxy service identified by a port number attributed by said sub-network bridging device; and announcing each said proxy services on the UPnP sub-network.

### Disclosure of the Invention

Aspects and embodiments of the invention are set out in the appended claims.

### Brief Description of the Drawings

Fig. 1 is a view showing a network system of an image information apparatus using a ubiquitous image module of a first embodiment.
Fig. 2 is a view conceptually showing a hardware structure of the ubiquitous image module of the first embodiment.
Fig. 3 is a view conceptually showing a software structure of the ubiquitous image module of the first embodiment.
Fig. 4 is a view showing a bus type connection view of the ubiquitous image module of the first embodiment.
Fig. 5 is a view showing a star type connection view of the ubiquitous image module of the first embodiment.
Fig. 6 is a view showing a structural example of a system in which the ubiquitous image module of the first embodiment and an image information apparatus are combined.
Fig. 7 is a view showing a structural example of a system in which the ubiquitous image module having an image interface of the first embodiment and the image information apparatus are combined.
Fig. 8 is a view showing a structural example of a system in which the ubiquitous image module having an external network connection terminal of the first embodiment and the image information apparatus are combined.
Fig. 9 shows a structural example of the case where the ubiquitous image module of the first embodiment is used for a monitor recorder system.
Fig. 10 shows another structural example of the case where the ubiquitous image module of the first embodiment is used for a monitor recorder system.
Fig. 11 is a view showing a structure of a software block of the case where the ubiquitous image module of the first embodiment is applied to a system of a DVD/HDD recorder 7.
Fig. 12 is a view showing a software block structure of the ubiquitous image module of the first embodiment.
Fig. 13 is a software block diagram of the case where the ubiquitous image module of the first embodiment is applied to each model of an image information apparatus.
Fig. 14 is a view showing a software block structure of an IPv6-capable Internet communication protocol middleware of the first embodiment.
Fig. 15 is a view showing a software block structure of the case where a universal plug and play middleware of the first embodiment is expanded.
Fig. 16 is a view showing a software block structure of an image pickup/display part of the ubiquitous image module of the first embodiment.
Fig. 17 is a view showing a software block structure of an image distribution storage middleware of the ubiquitous image module of the first embodiment.
Fig. 18 is a view showing a relation between a software of the image information apparatus and a software of the ubiquitous image module.
Fig. 19 is a view conceptually showing a state in which the ubiquitous image module of the first embodiment and the image information apparatus are transparently connected at a system level.

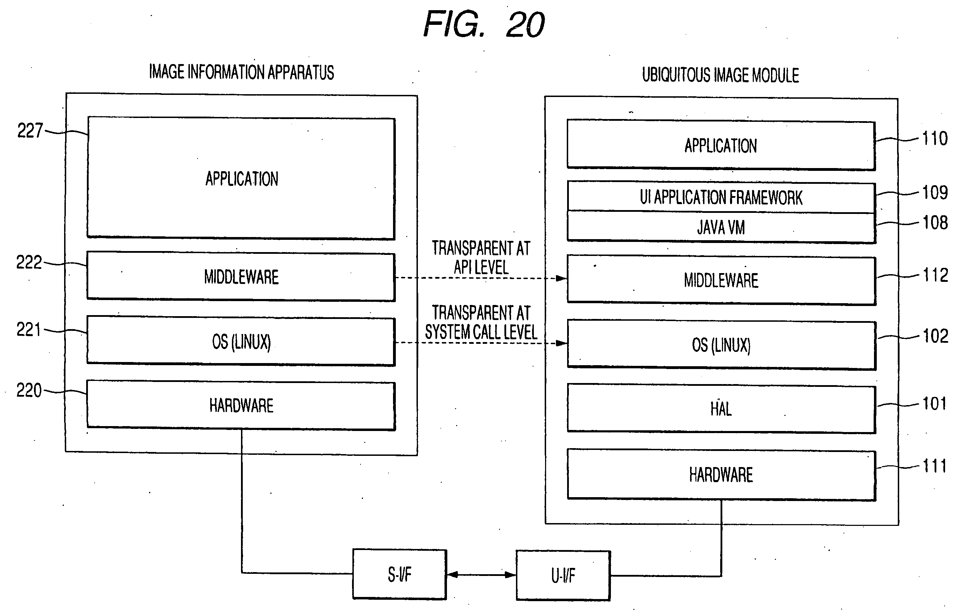

Fig. 20 is a view conceptually showing a state in which the ubiquitous image module of the first embodiment and the image information apparatus are transparently connected at a system level and an API level.
Fig. 21 is a view showing a structure of a software block of the case where the ubiquitous image module of the first embodiment is applied to a system of an image recording apparatus.
Fig. 22 is a view showing a structural example of a system in which a ubiquitous image module of a second embodiment and a mobile application unit are combined.
Fig. 23 is a view showing a structural example of a system in which a ubiquitous image module having an external network connection terminal of a third embodiment and an image information apparatus are combined.
Fig. 24 is a view schematically showing a connection mode in which the ubiquitous image module of the third embodiment is connected to an IP network.
Fig. 25 is a view showing general operation steps defined in the UPnP standards.
Fig. 26 is a view showing UPnP AV architecture.
Fig. 27 is a view showing a general playback flow of content in the UPnP AV architecture.
Fig. 28 is a view showing a software structure in the ubiquitous image module of the third embodiment.
Fig. 29 is a view showing a sequence of operation of software in addressing S301.
Fig. 30 is a view showing a sequence in discovery S302.
Fig. 31 is a view showing a sequence in the discovery S302.
Fig. 32 is a view showing a sequence of operation of the software in description S303.
Fig. 33 is a view showing a sequence of operation of the software in control S304.
Fig. 34 is a view showing a sequence of operation of the software in eventing S305.
Fig. 35 is a view showing a sequence of operation of the software in the eventing S305.
Fig. 36 is a view showing a correspondence table between a UPnP service and an AV/C command.
Fig. 37 is a view showing a sequence of operation of software in content search S311.
Fig. 38 is a view showing a sequence of operation of the software in protocol data format check S312.
Fig. 39 is a view showing a sequence of operation of the software in server/renderer preparation S313.
Fig. 40 is a view showing a sequence of operation of software in content selection S314.
Fig. 41 is a view showing a sequence of operation of the software in playback S315.
Fig. 42 is a view showing a sequence of operation of the software in volume/picture quality adjustment S316.
Fig. 43 is a view showing a sequence of operation of the software in transfer completion S316.
Fig. 44 is a view showing a structural example of a conventional image information apparatus.
Fig. 45 is a view showing a structural example of a conventional cellular phone apparatus.

### Best Mode for Carrying Out the Invention

Hereinafter, a description will be made based on embodiments illustrating the invention.

### First Embodiment

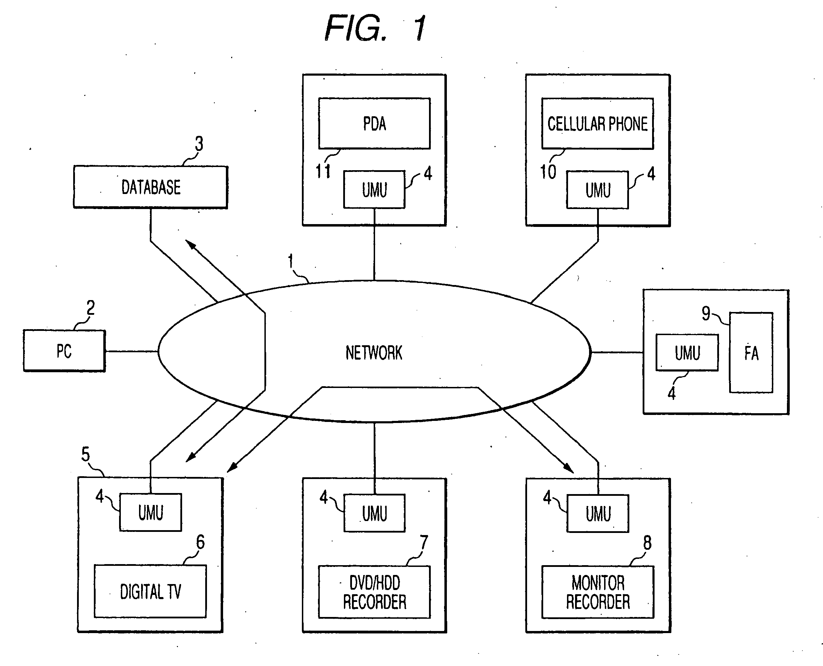

Fig. 1 shows a network system view of an image information apparatus using a ubiquitous (Ubiquitous) image module (hereinafter referred to as a "UM") according to a first embodiment.

A network 1 is a network including a small-scale LAN and the large-scale Internet, and various kinds of personal computer servers and personal computer clients are connected thereto.

A PC 2 is a personal computer connected to the network 1 and is used for various services and uses such as send/receive of mail, development/browsing of homepages, and the like.

In a database 3, streaming data of image distribution, storage of image and music data, management data of Factory Automation (hereinafter referred to as "FA"), monitor screen of a monitor camera and the like are stored.

A digital TV 6 denotes a display device for displaying image content of digital input, a DVD/HDD recorder 7 denotes recorder for storing and playing image and music data in a large capacity storage such as a DVD or a HDD, a monitor recorder 8 denotes a recorder for storing a picture of an elevator or a state in a store taken by a camera, an FA 9 denotes an FA equipment in a factory, a cellular phone 10 denotes a cellular phone which can not be network-connected by itself, and a PDA 11 denotes a personal information terminal.

As stated above, various equipments have possibility of being connected to the network 1, and the connection to the network 1 becomes possible by attaching a ubiquitous image module unit (hereinafter referred to as a "UMU") 4 to each equipment. That is, the UMU described below is interposed between the equipment and the network so that differences in hardware, software and the like between the various equipments are absorbed, and an image information apparatus virtually having a new function is formed by using the function of the connected UMU.

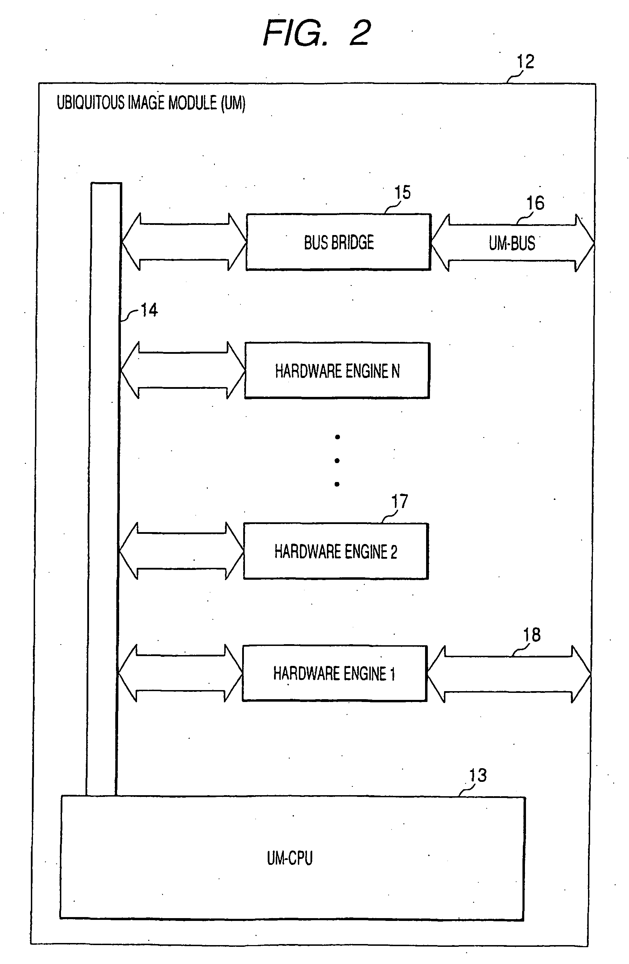

Fig. 2 is a view showing a structure of a UM of an important element constituting the UMU 4.

In the drawing, a UM 12 includes a CPU for UM (hereinafter referred to as a "UM-CPU") 13 which is a computer for controlling after-mentioned respective hardware engines in the UM, a local bus (internal BUS) 14 for connecting the UM-CPU 13 and the respective hardware engines, a general-purpose bus (UM-BUS) 16 for connection to an external image information apparatus, a bus bridge 15 for connecting the local bus (internal BUS) 14 and the general-purpose bus (UM-BUS) 16, and the plural hardware engines (hardware engines 1, ···, N) 17 for realizing, by hardware, various functions necessary for image processing of the network.

Here, it is also possible to provide, from the hardware engine 17, for example, a wired LAN for connection to the network, a wireless LAN, or a bus line (dedicated bus) 18 for serial bus connection.

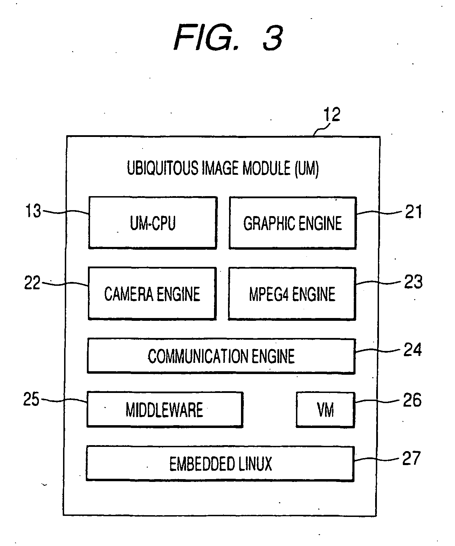

The respective hardware engines (hardware engines 1, ··, N) are engines for supplementing functions relating to the image information network, and for example, there are functions of, as shown in Fig. 3, a communication engine 24 for communicating with wired LAN for connection to network environment, wireless LAN or serial bus, a graphic engine 21 for improving drawing performance, a camera engine 22 for performing an image pickup signal processing of a moving picture or a still picture, and an MPEG4 engine 23 for moving picture compression. That is, each of the hardware engines is an engine to enable addition and supplement of the function, which does not originally exist in the image information apparatus, by mounting the UMU 4.

Incidentally, the example set forth here is merely an example, and a function required for forming the network can be formed by this engine.

Besides, a memory control function of a DMA (Direct Memory Access) controller or the like can also be realized.

As shown in Fig. 3, the UM 12 according to this embodiment includes an embedded Linux 27 as an OS (Operating System) to support a distributed execution function, a middleware 25, a virtual machine (Virtual Machine, hereinafter referred to as a "VM") 26, an application software and the like, and the function relating to the network can be realized by only the UM.

That is, the UM 12 according to this embodiment is a module which can realize the function of a host computer relating to the network.

Incidentally, the VM 26 used here is, for example, a JAVA (registered trademark) VM.

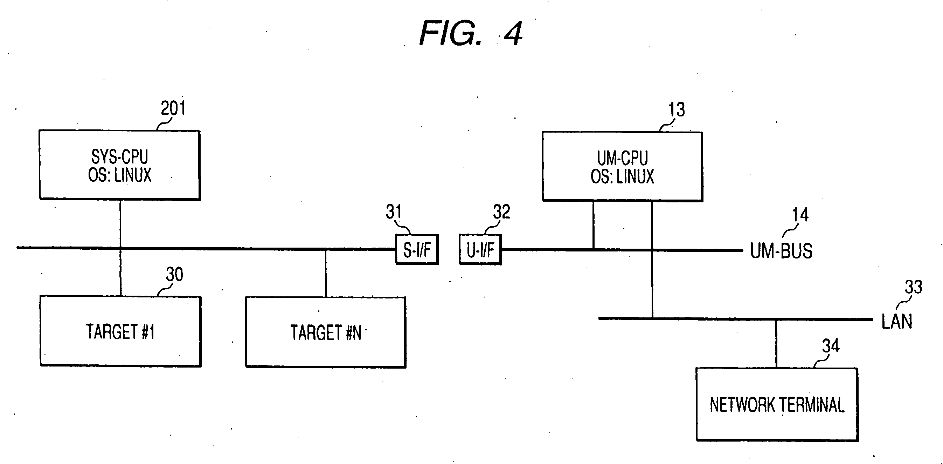

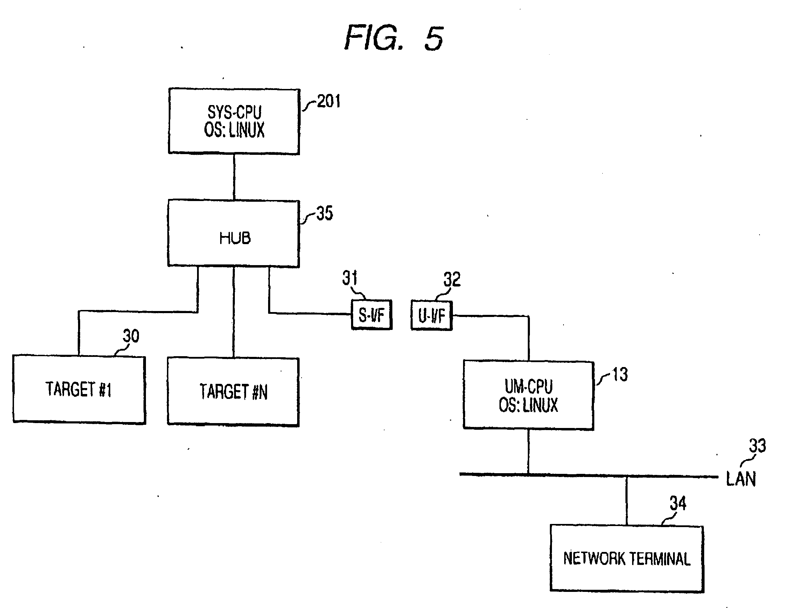

Fig. 4 and Fig. 5 show topology (topology) for connecting the UM to the image information apparatus.

A system CPU (hereinafter referred to as a "SYS-CPU") 201 and the UM-CPU 13 can be connected in a bus form or in a star form through a HUB 35.

Hereinafter, the respective detailed descriptions will be made.

Fig. 4 shows the connection topology in the bus form, and the SYS-CPU 201 and the UM-CPU 13 are connected to a UM-BUS 14 in the bus-type.

Besides, the SYS-CPU 201 realizes the function of a host server to control the system of the image information apparatus and the UM-CPU 13 realizes the function of a network server.

Here, the importance is that the image information apparatus performs an operation to satisfy the product specifications by the SYS-CPU 201 without any problem.

The UM-CPU 13 of the UM 12 can be mechanically connected by a system side interface (hereinafter referred to as a "S-I/F") 31 and a UM side interface (hereinafter referred to 15 as a "U-I/F") 32.

In a state where a network function with high performance and high added value is desired to be added to the image information apparatus, the UMU 12 is connected through the S-I/F 31.and the U-I/F 32.

By this, for example, a network function to access a network terminal 34 of another apparatus on the LAN can be realized.

That is, in the case where the network function with higher performance and higher added value, which has not been provided in the image information apparatus itself, is desired to be added, the network function of, for example, accessing the network terminal 34 on the LAN 33 can be realized by connecting the UM 4 through the S-I/F 31 and the U-I/F 32.

The expansion of the function as stated above becomes possible in such a way that the UM-CPU in the UM 12 controls the SYS-CPU 201 to control the system of the image information apparatus.

Incidentally, a device (memory, dedicated function IC) having no host function can be connected onto the UM-BUS of the general-purpose bus, and a structure in which it is not connected can also be adopted.

Fig. 5 shows the configuration of the case of the star type, which is different only in the structure that the UM-CPU 13 is connected through the HUB 35, and other functions are the same as the case of the bus type.

Besides, the connection form of this structure can support a ring type as well without any problem.

Here, as the connection between the S-I/F 31 and the U-I/F 32, it is possible to adopt a structure of parallel transfer such as ATA (AT Attachment: one of interfaces for a hard disk device), PCI (Peri-pheral Component Interface: one of input/output buses used for personal computers or workstations), SCSI (Small Computer System Interface: standards of input/output interface used for personal computers or workstations), PCMCIA (Personal Computer Memory Card International Association), or general-purpose CPUBUS, or a structure of serial transfer such as IEEE 1394, USB (Universal Serial Bus: serial interface for peripheral devices such as a keyboard of a personal computer), or UART (Universal Asynchronous Receiver-Transceiver).

Besides, as a connection method of the image information apparatus and the UM, it is possible to use a method of connector connection used in PC card or card BUS, card edge connector connection used in PCI bus connection or the like, or cable connection of an FPC cable, flat cable or IEEE 1394 cable.

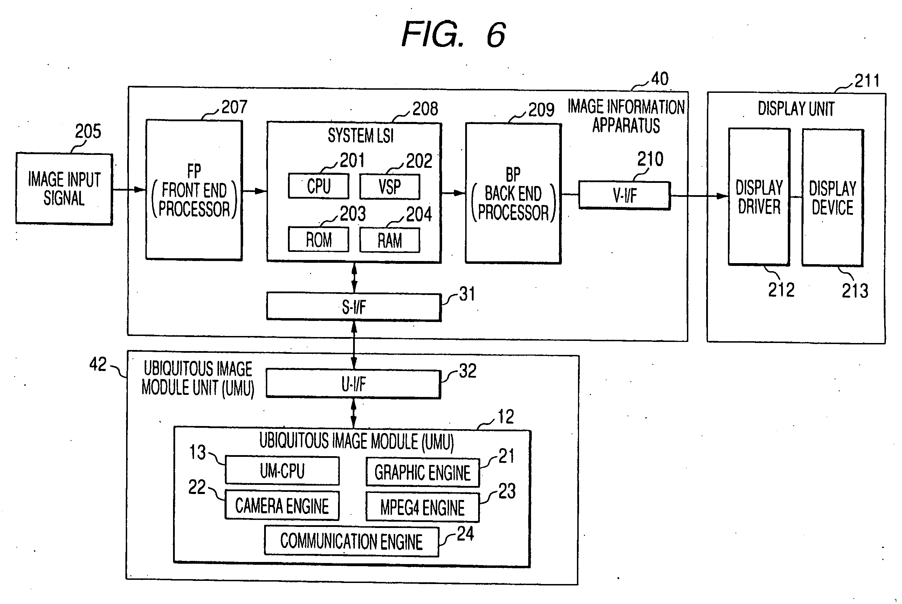

Fig. 6 shows a whole structural example of the case where a UMU 42 according to this embodiment is connected to an image information apparatus 40.

The image information apparatus 40 has such a structure that a S-I/F 31 is added to the conventional image information apparatus 206 shown in Fig. 44.

Besides, the UMU 42 has such a structure that a U-I/F 32 is added to the UM 12 shown in Fig. 2 or Fig. 3.

The image information apparatus 40 to which the function of the UM is added can be realized by connecting the respective interfaces S-I/F 31 and U-I/F 32.

After being connected to the Internet environment by the communication engine 24, the UMU 42 downloads an MPEG4 file of picture and sound from a site on the Internet.

The downloaded MPEG4 file is decoded by the MPEG4 engine 23, is graphic processed by the graphic engine 21, and is outputted through the interface U-I/F 32 of the UMU in data format in which it can be used by the image information apparatus 40.

The data inputted to the image information apparatus 40 is signal processed into a state in which it can be displayed on the display unit 211, and is displayed on the display unit 211.

Besides, a moving picture/still picture file inputted from a camera is subjected to pixel number conversion, rate conversion, and image processing by the camera engine 22 of the UMU 42, is graphic processed by the graphic engine 21, and is outputted through the interface U-I/F 32 of the UMU 42 in data format in which it can be used by the image information apparatus 40.

The data inputted to the image information apparatus 40 is signal processed into the state in which it can be displayed on the display unit 211, and is displayed on the display unit 211.

Incidentally, the above processing of each of the engines is merely one example, and a use procedure of an engine and a function of the engine can be realized by this system as long as it is the function to reinforce the network function.

In the structure of the image information apparatus and the UMU, although the system for displaying image data has been mainly described, the same structure can also be applied to a playback apparatus of voice input, a display/distribution device of text input, or a storage device of storage input of information.

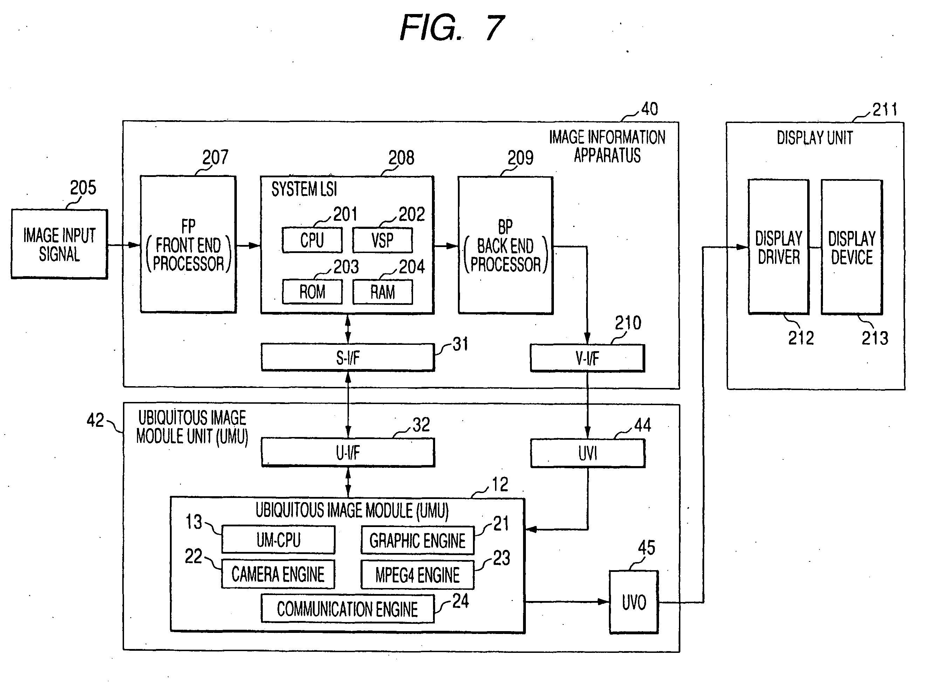

Fig. 7 shows an example of a structure of the case where a function for displaying an image on the display unit 211 is added to the UMU 42.

A UVI 44 is a video (image) input terminal of the UMU 42, and forms an interface which can be connected to a V-I/F 210 as the image output terminal of the image information apparatus 40.

A UVO 45 is an image output signal terminal of a display engine of a hardware engine, and is connected to an input interface of the display unit 211.

For example, an image output of the image information apparatus 40 can be overlaid (over lay) on the display screen of the graphic engine 21 of the UM 12.

Besides, although it is also possible to adopt a structure that the image signal is transferred by using the general-purpose buses of the S-I/F 31 and the U-I/F 32, by using the structure of this embodiment, the image signal can be supplied to the UM without lowering the transfer efficiency.

Further, in the case where the image information apparatus 40 is not network-ready, although it is difficult to adopt a structure that graphic data on the Internet is overlaid on the image signal and is outputted, since the UM has the function of the overlay as the inevitable function of the network, the functionality expansion of the image information apparatus can be easily realized without newly developing a system LSI.

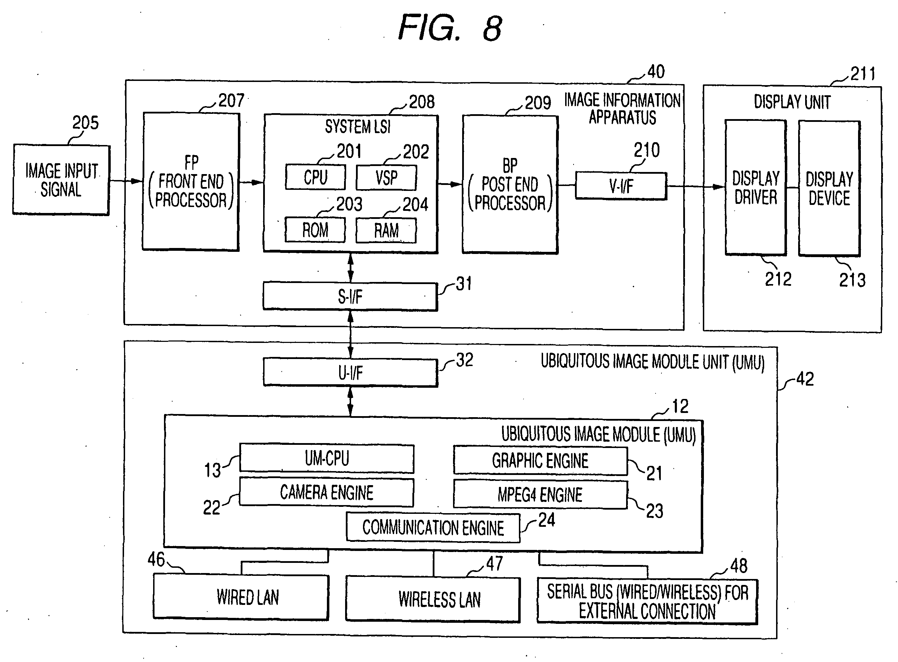

Fig. 8 shows a structural example of the case where terminals for external network connection are added to the communication engine 24 of the UMU 42.

An external connection terminal 46 for wired LAN, an external connection terminal 47 for wireless LAN, and a serial bus 48 for external connection are arranged correspondingly to the respective hardware engines, so that the UMU 42 can be connected to the network through the wired LAN, the wireless LAN, or the serial bus such as IEEE 1394.

Incidentally, the UMU 42 can be constructed to have all the foregoing terminals, or can be constructed to have only one terminal, and flexible measures can be taken according to the network or the product.

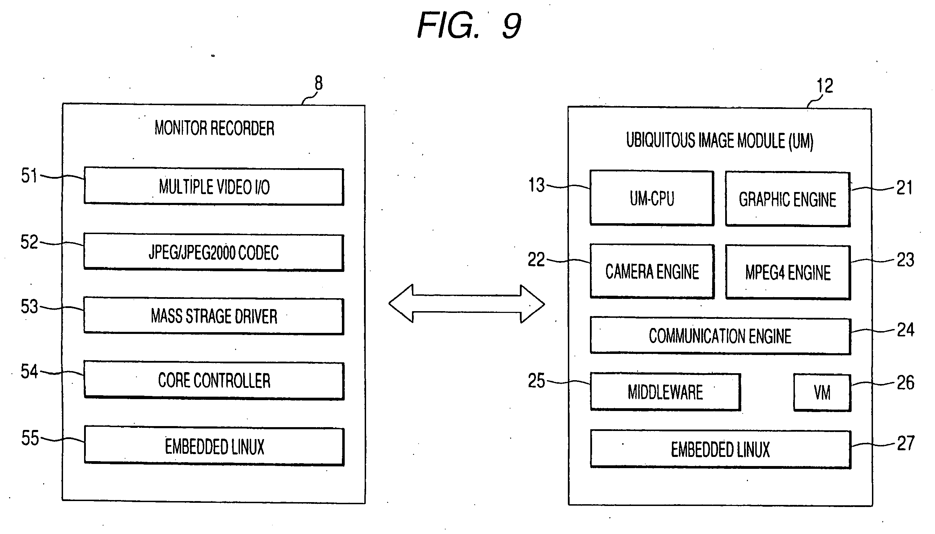

Fig. 9 shows a structural example of the case in which the UM 12 according to this embodiment is applied to a system of a monitor recorder 8.

In the drawing, the monitor recorder 8 has a basic block as a monitor recorder, and is constructed to include a Multiple Video I/O 51 for performing transmission/reception of an image signal to/from an I/F of a camera and other equipments having image output, a JPEG/JPEG2000 Codec 52 for performing compression/expansion such as JPEG/JPEG2000, a Mass Storage driver 53 for driving a mass storage device such as HDD/DVD, a Core controller part 54 for performing control of the monitor recorder, and an embedded Linux 55, as an OS, of the same OS as the UM-CPU 13.

In the case where the function of the camera engine part of the UM-CPU 13 is used by realizing the signal processing of the camera module by using the function of the Multiple Video I/O 51 of the monitor recorder 8, it is also possible not to use the function of the UM-CPU 13, and there is a function to selectively switch the engines of the ubiquitous image module in conformity with the specifications of the image information apparatus 40.

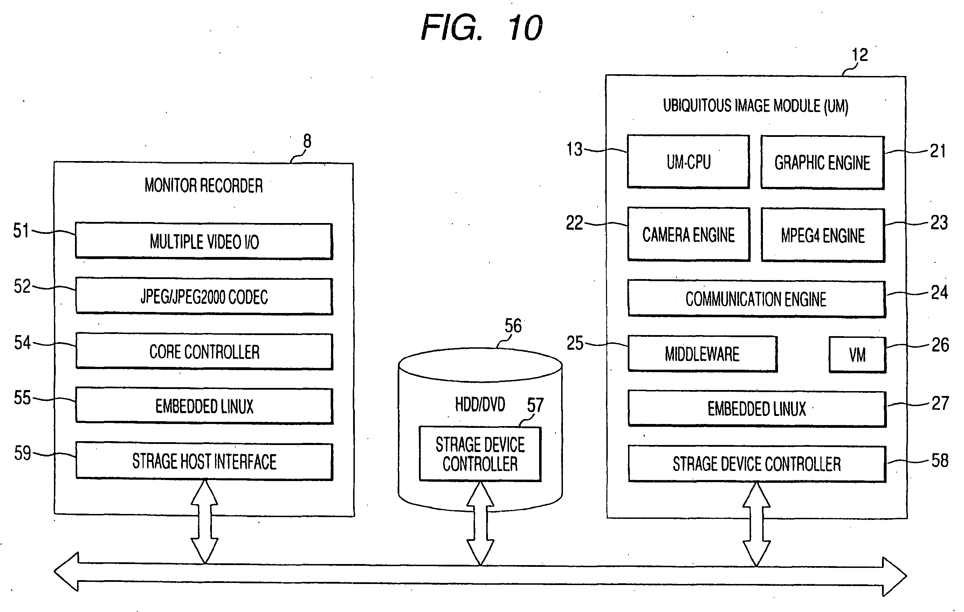

Besides, it is also possible to adopt a structure as shown in Fig. 10. That is, a monitor recorder 8 includes a Storage host interface 59 to control an interface of a mass storage device such as a HDD/DVD 56, and a ubiquitous image module 12 and the UDD/DVD 56 include a Storage device controller 57, 58 to perform storage interface, and are connected to the Storage host interface 59 of the monitor recorder 8.

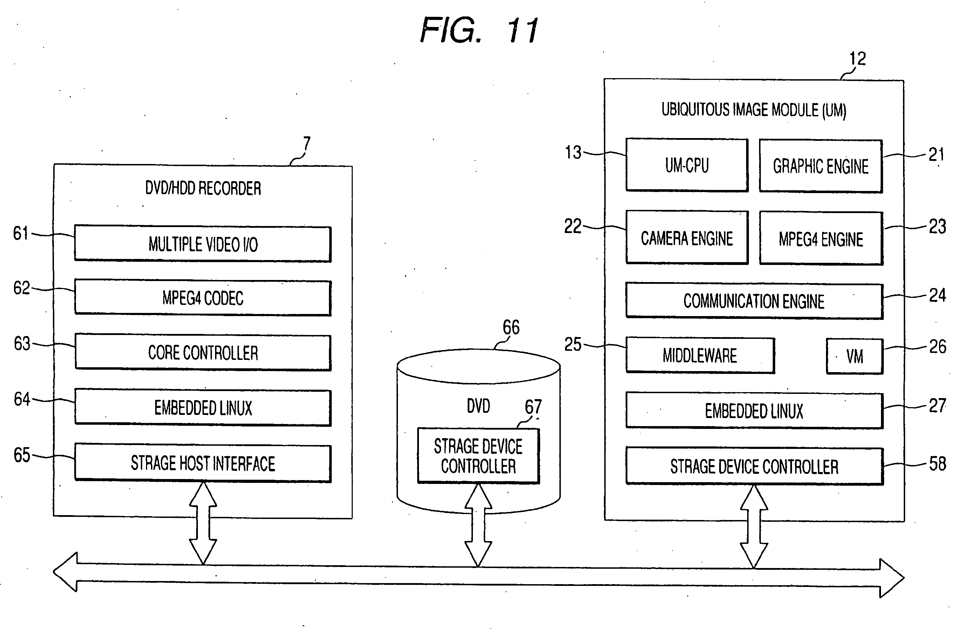

Further, Fig. 11 shows a structural example of the case where a UM 12 is applied to a system of a DVD/HDD recorder 7. In the drawing, the DVD/HDD recorder 7 has a basic block of a DVD recorder, and is constructed to include a Multiple Video I/O 61 for performing transmission/reception of an image signal to/from an equipment having image output, a MPEG4 Codec 62 for performing compression/expansion such as MPEG4, a Storage host interface 65 for controlling an interface of a storage device such as a DVD, a Core controller 63 for performing control of the DVD recorder, and, as an OS, an embedded Linux 64 equal to that of the UM-CPU 13.

Although the description has been given to the case where application is made to the image information apparatus such as the DTV 5, the image recording apparatus of the DVD/HDD recorder 7, and the monitor apparatus of the monitor recorder 8, application can also be made to the FA 9, the cellular phone 10 and the PDA 11 by the same structure.

In the above description, although the description has been given to the case where the same OS is used for the image information apparatus and the UM, different ones can also be used in the structure.

However, when the same OS is used, in the case where the function of the hardware engine adopted in the UM becomes obsolete, and when it is integrated as an inevitable function into the image information apparatus, since the OS is common, the revision work of the software can be easily performed, and the development cost for the revision is low, and there is superiority in development, for example, from the viewpoint of reliability or the like, bugs (bug: defect of a program) are not produced easily.

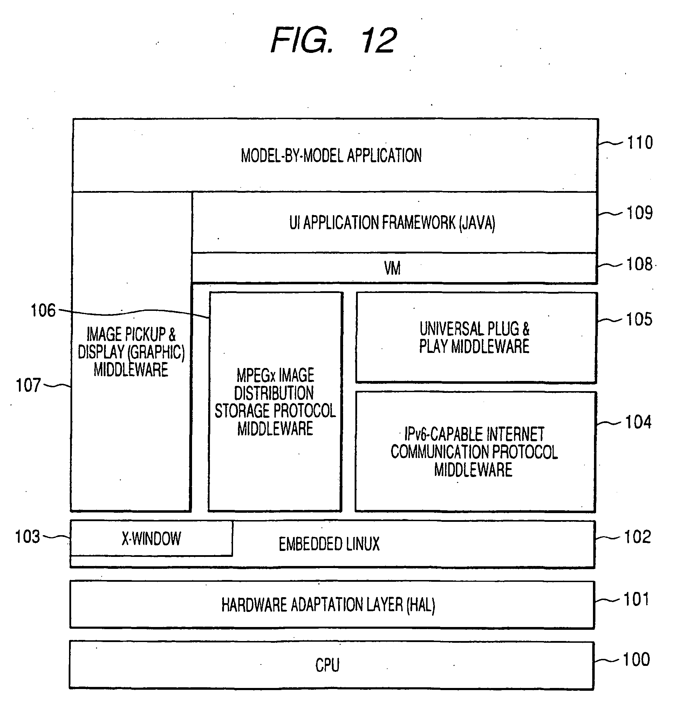

Fig. 12 is a software block structural view of the UM according to the embodiment 1.

As shown in the drawing, the lowermost layer is a hardware layer 100 including a microcomputer (CPU).

A Hardware Adaptation Layer (hereinafter referred to as a "HAL") 101 as a software for absorbing a difference between respective hardwares by abstracting the hardware is arranged above the hardware layer 100.

An embedded Linux 102 as a multi-task operating system is arranged above the HAL 101.

As stated above, the HAL 101 is arranged between the hardware layer 100 and the embedded Linux 102, and the HAL 101 functions as an interface between the hardware layer 100 and the embedded Linux 102. Accordingly, in a large sense, the HAL 101 can be grasped as a part of the hardware layer 100 or the embedded Linux 102.

The embedded Linux 102 as the embedded multi-task operating system controls respective hardware devices as components of the hardware layer 100 through software belonging to the HAL 101, and provides the execution environment of an application.

Besides, as a graphic system operating on the embedded Linux 102, an X-Window (registered trademark) 103 is used.

As middlewares operating on the operating system Linux 102, when roughly classified, four middlewares are arranged.

The first is for performing communication processing to connect with the Internet, and is an IPv6-capable Internet communication protocol middleware 104 which supports also the protocol of IPv6 as a next-generation Internet protocol.

The second is for automatically performing a setting when the equipment is connected to the network, and is a universal plug and play (Universal Plug and Play, hereinafter referred to as "UPnP") middleware 105.

The UPnP middleware 105 belongs to a hierarchy higher than the IPv6-capable Internet communication protocol middleware 104 in order to use the protocol belonging to the IPv6-capable Internet communication protocol middleware 104.

The third is for performing processing of distribution, storage and the like of multimedia data by combination of an encode/decode processing corresponding to MPEG2/4 as the standards for multimedia, a data processing corresponding to MPEG7, and a content management processing corresponding to MPEG21, and is an MPEGx image distribution storage protocol middleware 106.

The fourth is for performing control of a camera and two-dimensional/three-dimensional graphic processing, and is an image pickup and display (graphic) middleware 107.

A JAVA (registered trademark) VM 108 as the application execution environment of JAVA (registered trademark) is arranged above the UPnP middleware 105 and the MPEGx image distribution storage protocol middleware 106 in the foregoing middleware group, and a UI application framework 109 for facilitating creation of an application including a user interface is arranged above the JAVA (registered trademark) VM 108.

The UI application framework 109 is, for example, a set of classes operating on the JAVA (registered trademark) VM 108.

A model-by-model application 110 for realizing, by using the UI application framework 109 and the image pickup and display (graphic) middleware 107, a function necessary for each model in which the ubiquitous image module is mounted is arranged at the top.

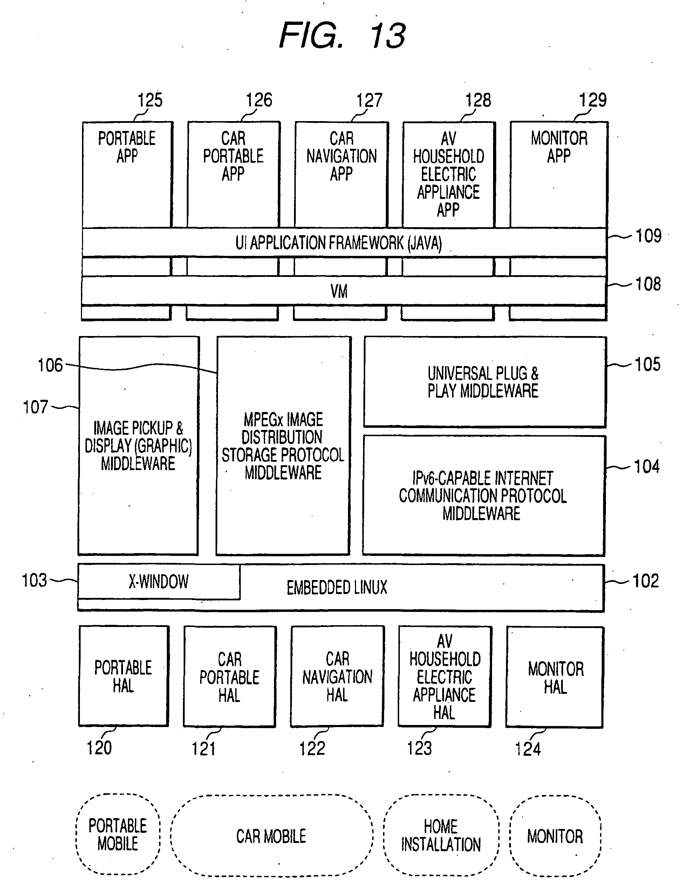

Fig. 13 is a software block diagram of the case where the ubiquitous image module is applied to each model.

As shown in the drawing, only the highest application layer and the HAL positioned above the hardware layer are changed for individual models, and the other layers are used in common, so that functions corresponding to different models can be realized.

The drawing illustrates that in the case where the ubiquitous image module is applied to the cellular phone, a portable HAL 120 and a portable Application (hereinafter referred to as "APP") 125 are combined.

Similarly, a car portable HAL 121 and a Car portable APP 126 are combined for application to an in-car telephone, a car navigation HAL 122 and a car navigation APP 127 are combined for application to a car navigation system, an AV household electric appliance HAL 123 and an AV household electric appliance APP 128 are combined for application to an AV household electric appliance, and a monitor HAL 124 and a monitor APP 129 are combined for application to a monitor system equipment.

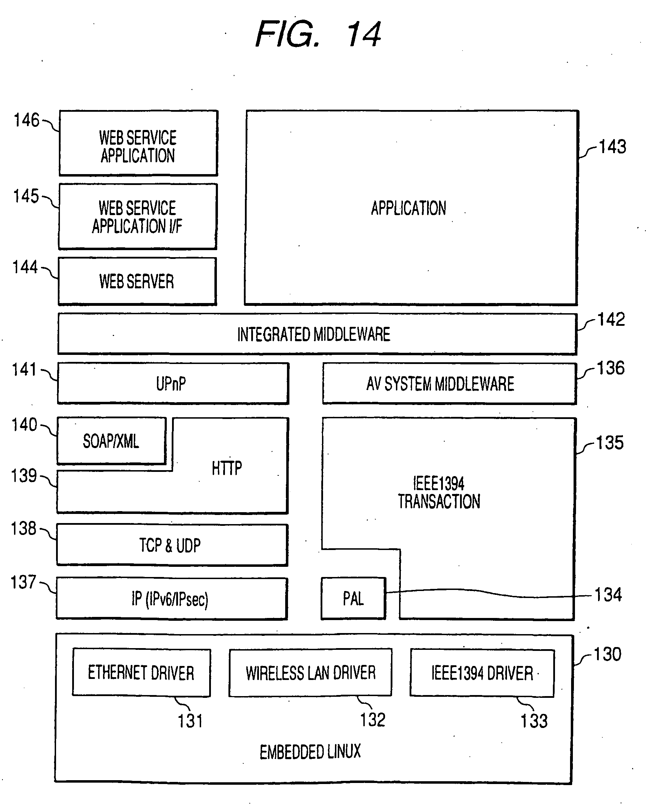

Fig. 14 is a view showing a software block structure of the IPv6-capable Internet communication protocol middleware 104.

In the drawing, an interface for communication includes three kinds: Ethernet (registered trademark) (Ethernet (registered trademark)) including 10BASE-T and 100BASE-TX, wireless LAN including IEEE802.11a/b/g, and high speed serial communication such as IEEE1394.

As device driver softwares for controlling the respective hardwares, an Ethernet (registered trademark) driver 131, a wireless LAN driver 132, and an IEEE1394 driver 133 are arranged.

As a higher layer of the Ethernet (registered trademark) driver 131 and the wireless LAN driver 132, an IP protocol stack (IP) 137 for performing the processing of an Internet protocol is arranged.

The IP stack 137 includes processing to support IPv6 as a next-generation Internet protocol, and processing to support IPsec as a protocol for security.

As a higher layer of the IEEE1394 driver 133, an IEEE1394 transaction stack 135 to perform IEEE1394 transaction (Transaction) processing is arranged.

Besides, in order that the IEEE1394 transaction can be executed via the wireless LAN, a PAL (Protocol Adaptation Layer) 134 is arranged between the wireless LAN driver 132 and the IEEE1394 transaction stack 135.

The PAL 134 performs protocol conversion between the IEEE 1394 transaction and the wireless LAN.

As a transport layer, a stack 138 of TCP (Transmission Control Protocol: a communication protocol of a transport layer of a network) and UDP (User Datagram Protocol: a communication protocol of a transport layer not assuring reliability) is arranged above the IP stack 137.

An HTTP stack 139 to perform protocol processing of HTTP (Hypertext Trans-far Protocol) is arranged above the stack 138 of the TCP and UDP.

Besides, a SOAP/XML stack 140 to perform protocol processing of SOAP (Simple Object Access Protocol) in which message communication in XML format is performed using the HTTP 139 is arranged above this.

A socket (a program interface for performing exchange of data via a network) is used as an interface between the HTTP stack 139 and the stack 138 of the TCP and UDP.

In higher layers above the operating system Linux 130, layers including the HTTP stack 139, the SOAP/XML stack 140, and the 1394 transaction stack 135 are included in the IPv6-capable Internet communication protocol middleware 104.

As a layer higher than these, a UPnP stack 141 to perform UPnP processing as a protocol for realizing an Internet protocol-base UPnP function is arranged above the SOAP/XML stack 140 and the HTTP stack 139.

Besides, an AV system middleware 136 to perform processing for realizing a UPnP function of a network using IEEE1394 is arranged above the IEEE1394 transaction stack 135.

An integrated middleware 142 to mutually connect the respective networks is arranged above the UPnP stack 141 and the AV system middleware 136.

The layer including the AV system middleware 136, the UPnP stack 141, and the integrated middleware 142 is included in the foregoing UPnP middleware 105.

A layer higher than the integrated middleware 142 becomes an application layer.

In order to support a Web service for performing application linkage to the other computers on the network by using the SOAP, a Web server 144, a Web service application I/F 145, and a Web service application 146 are hierarchically arranged.

The Web service application 146 uses a service provided by a Web server through the Web service I/F 145.

Besides, an application other than the Web service performs communication via the integrated middleware 142. As a main application, a browser software using HTTP is named.

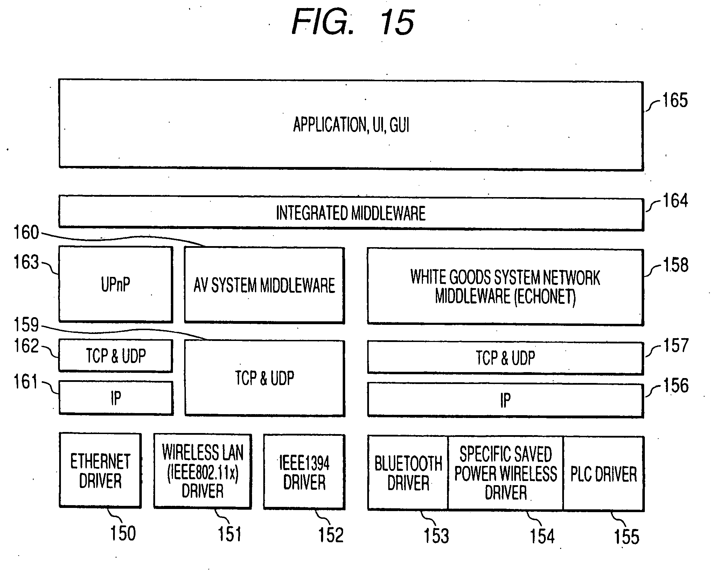

Fig. 15 is view showing a software block structure of the case where the UPnP middleware 105 described in Fig. 14 is extended.

In this drawing, in addition to the network connection using Ethernet (registered trademark), wireless LAN, and IEEE1394 described in Fig. 14, networks using Bluetooth, specific power saving wireless, and PLC (Power Line Communication) using a power line are added as interfaces for communication.

As device drivers for controlling the respective network interfaces, a Bluetooth driver 153, a specific small power driver 154, and a PLC driver 155 exist in the lowest layer, and an IP stack 156 and a stack 157 of TCP and UDP are hierarchically arranged above them.

A white goods system network middleware 158 is arranged as a higher layer of the stack 157 of the TCP and UDP.

Similarly to the case shown in Fig. 14, an integrated middleware 164 is arranged above the AV system middleware 136, the UPnP stack 141, and the white goods system network middleware 158, so that all networks can be mutually connected.

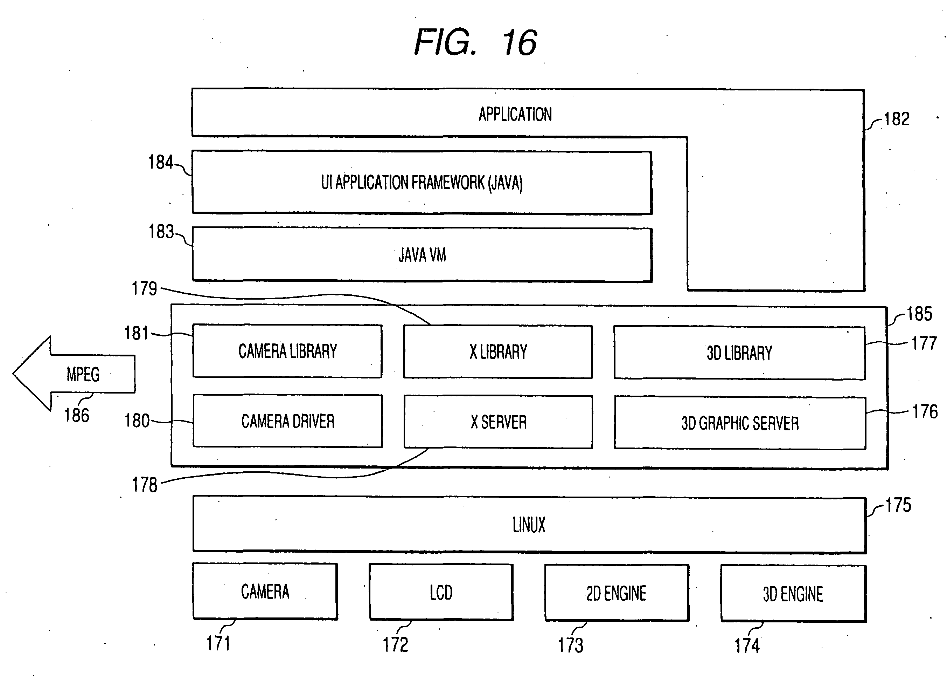

Fig. 16 is a view showing a software block structure of an image pickup/display part of the ubiquitous image module.

In the drawing, reference numeral 185 denotes an image pickup/display part middleware, and includes a software module group for providing image pickup/display type functions to applications.

The image pickup/display part middleware 185 has a double layer structure of a driver group for directly controlling hardware, and a library group for providing interfaces to the applications, and all software modules are configured on Linux.

The driver group includes a camera driver 180 for controlling an image pickup system hardware such as a camera 171, an X server 178 for controlling a display system hardware such as an LCD 172 and a 2D graphics engine 173, and a 3D graphic server 176 for controlling a 3D hardware such as a 3D graphics engine 174.

Besides, the library group is for providing an interface of image pickup/display function to an application, and includes a camera library 181 for providing a camera function, an X library 179 for providing an X-window (registered trademark) function, and a 3D graphics library 177 for providing a 3D function.

An application 182 is a higher software module providing a UI (user interface), such as, for example, a camera application or a browser.

In the case where the application 182 realizes the function of the image pickup and display system, it is realized by the program interface provided from the library group of the image pickup/display part middleware 185, and there is a case where the application 182 directly uses the function of the image pickup/display part middleware, and a case of using it via a UI application framework 184 and a JAVA (registered trademark) VM 183.

The main function provided by the image pickup/display part middleware 185 to the application 182 includes still picture photographing, moving picture photographing, moving picture preview display, 2D/3D display and the like.

In the case where image data inputted from the camera 171 is coded into JPEG, MPEG or the like and is stored/transmitted, the image data inputted from the camera 171 is transferred from the 3D graphic server 176 shown in the drawing to an image distribution storage protocol middleware block.

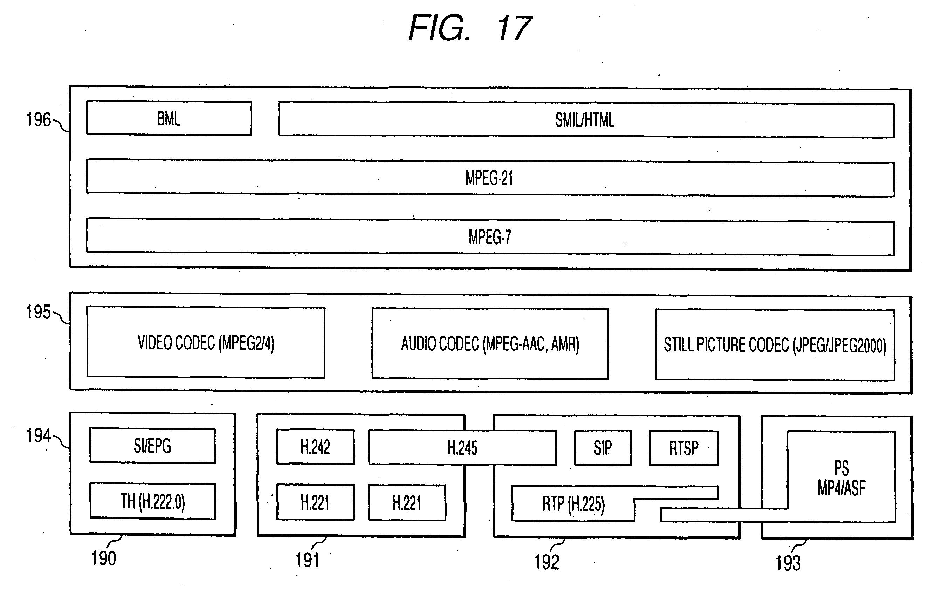

Fig. 17 is a software block diagram of an image distribution storage middleware of the UM.

The image distribution storage middleware of the UM of Fig. 17 is a software module group for providing distribution/reception control of media data, Quality of Service control to transmission, multiplex/demultiplex processing of media data and encode/decode, retrieval function of media and structure definition, and an identification function, and includes a media gateway layer 194 for performing multiplex processing of media corresponding to a communication path to be used and transmission control, a transcoder layer 195 for performing coding processing of media, and a media presentation layer 196 including structure description language of retrieval of media, identification and the like.

Besides, the media gateway layer 194 includes a TS block 190 for performing a processing of ITU-TH.222 to handle TS (Transport Stream) on the assumption that distribution is performed by broadcast or the like, a communication block 191 to support H.221 in which a transmission path such as ISDN is made an object and assumption is made such that communication is performed between terminals and H.223 in which assumption is made such that communication by mobile equipment is performed, an IP block 192 typified by H. 225 in which assumption is made such that media transmission by LAN or the Internet is performed, and a PS (Program Stream) block 193 to mainly handle a storage medium.

The image distribution storage middleware of the UM constructed as stated above acquires media data via the Internet in accordance with the UI operation of a higher application (for example, browser).

In the higher application, with respect to the acquisition of the media data, the media presentation layer 196 can use a content retrieval function using Multimedia Content Description Interface prescribed by MPEG-7, and a media copyright/protection function by IPMA (Intellectual Property Management and Protection) prescribed by MPEG-21.

The acquired data is subjected to a multiple separation processing by the media gateway layer 194 and a decode processing by the transcoder layer 195, and can be displayed at position and timing specified by SMIL (Synchronized Multimedia Integration Language)/HTML.

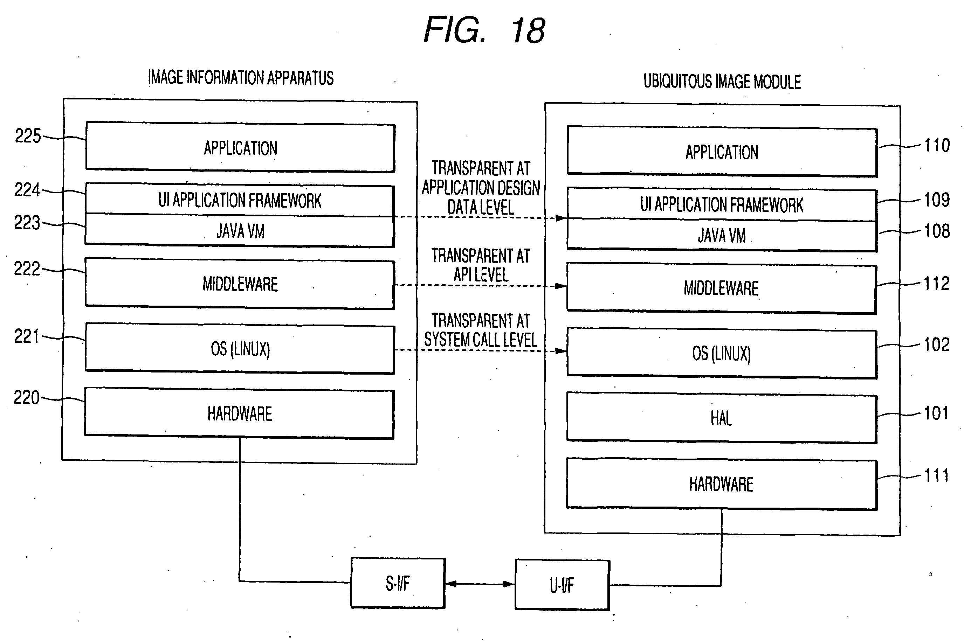

Fig. 18 is a structural view showing a relation between software of an image information apparatus and software of a UM.

In the UM, as described above, an operating system Linux 102 is arranged above a hardware 111 of the UM through a HAL 101, a middleware part 112 of the UM is arranged above that, a JAVA (registered trademark) VM 108 and a UI application framework 109 are arranged above that, and an application 110 using the UI application framework is arranged at the top.

Although it is not always necessary that the software structure of the image information apparatus adopts the same hierarchical structure as the UM, it is more desirable to uniform the hierarchical structures.

That is, it is ideal that an operating system Linux 221 is arranged above a hardware 220 of the image information apparatus, a middleware 222 of the image information apparatus is arranged above that, a JAVA (registered trademark) VM 223 and a UI application framework 224 are arranged above that, and an application 225 using the UI application framework is arranged at the top.

As a minimum condition, in the case where the hierarchies of the operating system Linux are consistent with each other, that is, the operating system Linux 221 of the image information apparatus is arranged, the operating system Linux 221 of the image information apparatus and the operating system Linux 111 of the UM are transparently connected at a system call level.

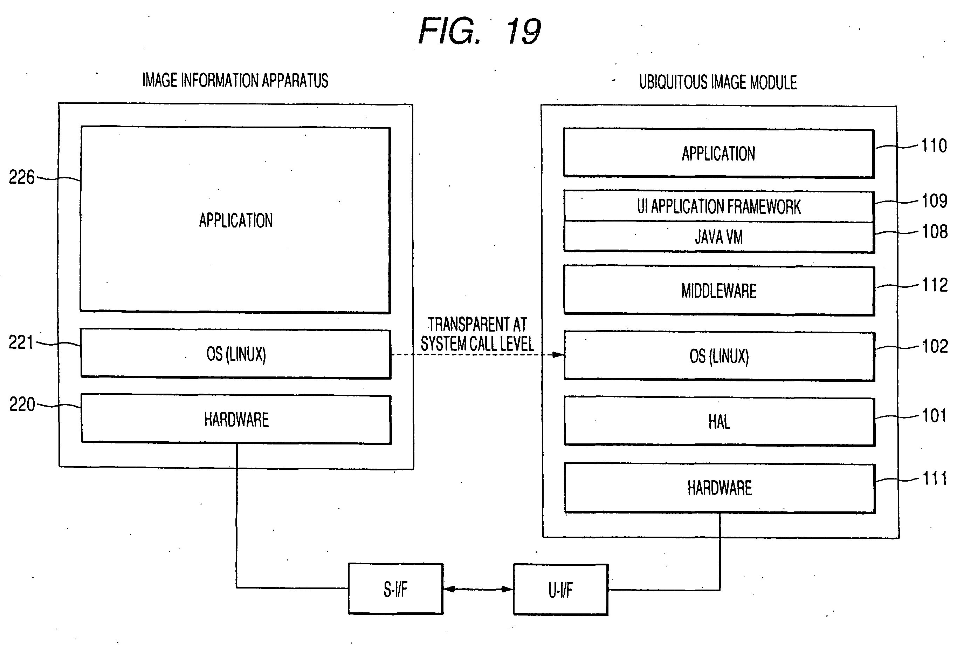

Fig. 19 conceptually shows the state at this time.

As a result, for example, a program on the image information apparatus uses an open instruction and a device of the UM can be opened.

Incidentally, in the case where a higher software uses a function of a lower software (for example, a case where an application software uses a function of a middleware), exchange of instructions and data is performed in accordance with a predetermined procedure.

At this time, in general, a procedure is different between the case where a function desired to be used exists on its own machine (here, the image information apparatus) and the case where it exists on the other machine (UM).

The wording of "transparently connected" means performing a connection so that irrespective of whether the function desired to be used exists on which one, the exchange can be made by the same procedure without paying attention to the difference.

Next, in the case where the hierarchical structure of the operating system and the middleware is consistent, or in the case where the structure of the middleware is consistent, that is, in the case where a middleware 222 is arranged above the operation system Linux 221 of the image information apparatus, in addition to the transparency at the foregoing system call level, the middleware 222 of the image information apparatus and the middleware 112 of the UM are transparently connected at a middleware API (Application Programming Interface) level.

As a result, for example, it becomes possible to operate the middleware of the UM by calling the middleware API from a program on the image information apparatus.

Besides, in the case where the hierarchies are consistent under the foregoing ideal condition, or in the case where the structure of the Java (registered trademark) VM 223 and/or the UI application framework 224 is consistent, that is, in the case where the operating system Linux 221 of the image information apparatus is arranged, the middleware 222 is arranged above that, the JAVA (registered trademark) VM 223 and the UI application framework 224 are arranged above that, and the application 225 using the UI application frame work is arranged at the top, in addition to the transparency at the system call and the middleware API level, the JAVA (registered trademark) VM 223 of the image information apparatus and the UI application framework 224 are transparently connected to the JAVA (registered trademark) VM 108 of the UM and the UI application framework 109 at an application design data level at the time of creating the application.

Fig. 18 conceptually shows the state at this time.

As a result, it becomes possible to create the application without paying attention to the difference in the platform between the image information apparatus and the ubiquitous image module.

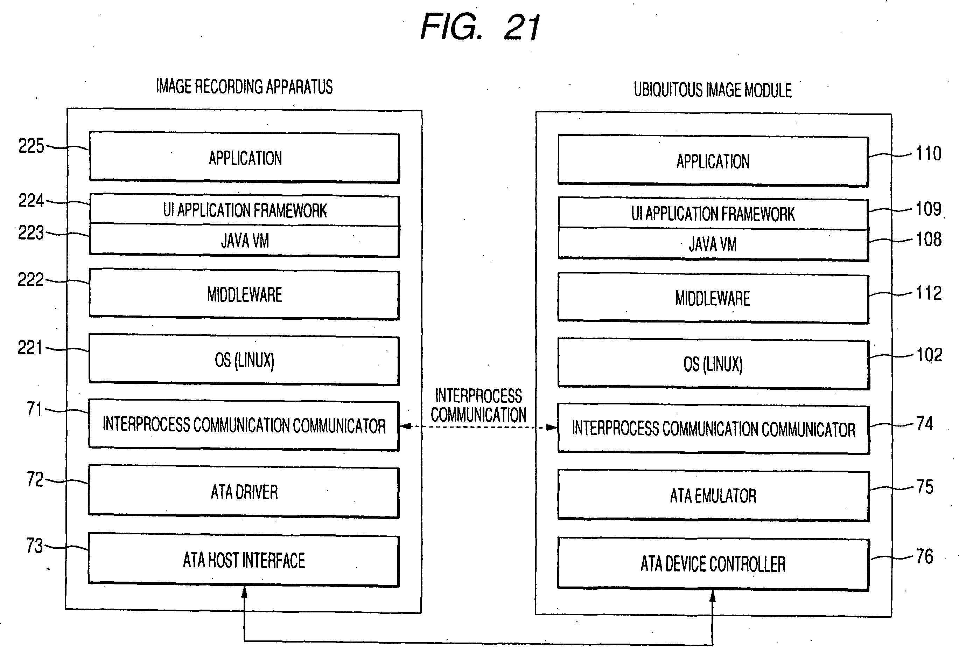

Further, Fig. 21 is a view showing a structure of a software block in the case where the UM is applied to a system of an image recording apparatus. An interprocess communication communicator 71 is a module for converting interprocess communication into an ATA command interface, and transmits an ATA command to an ATA device controller 76 of the ubiquitous image module through an ATA driver 72 and an ATA host interface 73.

The ATA device controller 76 receives the ATA command, an ATA emulator 75 analyzes the ATA command, and an interprocess communication communicator 74 converts it into interprocess communication. From the above, interprocess communication becomes possible between the process of the image recording apparatus and the process of the ubiquitous image module set.

That is, the communication communicator 71 for converting between the interprocess communication means on the image recording apparatus and the storage interface, and the communication communicator 74 for converting between the interprocess communication means on the UMU and the storage interface are provided, and the interprocess communication can be performed between the process on the image recording apparatus and the process on the UMU.

As described above, according to the structures of the softwares of the image information apparatus and the image recording apparatus, it is possible to change the coupling state of the softwares between the apparatus and the UM. In this case, as the hierarchical structures of the softwares of both become more equal to each other, it becomes possible to share the use of software at a higher layer, and as a result, it becomes possible to easily perform sharing of functions and transfer of functions.

In the above embodiment, although the description has been made while Linux is used as an example of the operating system of the apparatus and the UM, instead thereof, it is also possible to use POSIX-compliant or another similar operating system.

Besides, although the description has been made while using the JAVA (registered trademark) VM as an example of the virtual machine of the apparatus and the UM, instead thereof, it is also possible to use a JAVA (registered trademark) VM-compatible machine or another similar virtual machine.

Further, although the ATA is used as the storage interface, another general-purpose storage interface such as SCSI may be used.

Besides, although the storage interface is used, a general-purpose interface including a protocol set for storage, such as USB or IEEE 1394, may be used.

Besides, although the interprocess communication is used between the image recording apparatus and the UM by using the interprocess communication communicator, the interprocess communication may be used by using an interprogram communication communicator. That is, a communication communicator A for converting between interprogram communication means on the image recording apparatus and the storage interface, and a communication communicator B for converting between interprogram communication means on the ubiquitous image module unit and the storage interface are provided, and a program on the image recording apparatus and a program on the UMU may perform the interprogram communication.

Further, in this embodiment, although the UMU and the storage equipment are made to have separate structures, they may be constructed in an integrated form.

The UM, the UMU, and the respective apparatuses in the above described embodiment have effects as follows.

Since the UMU according to this embodiment incorporates therein the plural hardware engines and the OS to support the distributed execution function of the CPU, even if the specifications and functions requested for the image information apparatus are changed, the function change and expansion can be easily and flexibly performed, and the development cost for development of a new image information apparatus and the development period can be reduced.

Besides, the UMU according to this embodiment includes the HAL which is provided between the OS and the hardware layer including the CPU and absorbs the difference in the hardware, and/or the model-by-model middleware group operating on the OS, and/or the user interface framework for creating the user interface application operating on the virtual machine, and/or the user interface framework and/or the application for each image information apparatus created by using the middleware group. Thus, even if the specifications and functions required for the image information apparatus are changed, the function change and expansion can be easily and flexibly performed by suitably combining them, and the development cost for development of a new image information apparatus and the development period can be reduced.

Besides, since the plural hardware engines of the UMU according to this embodiment include the communication engine for performing communication with the network environment, the image information apparatus can be easily connected to the network environment.

Besides, in the image information system according to this embodiment, the OS having the same function as the UM is installed, and the OS installed in the image information apparatus and the OS installed in the UM are transparently connected, so that access is made from the image information apparatus to the UM at the level of the system call. Thus, when access is made from the program on the image information apparatus to a specified hardware device, the access can be made by the same procedure without paying attention to whether the hardware device exists on the image information apparatus or on the UM.

Besides, in the image information system according to this embodiment, the OS having the same function as the UM is installed, and the middleware group for each function is installed, or the image information apparatus installs the middleware group for each function having the same function as the UM, and the OS installed in the image information apparatus and the OS installed in the UM are transparently connected, and/or the middleware installed in the image information apparatus and the middleware installed in the UM are transparently connected, so that access is made from the image information apparatus to the UM at the API level of the middleware. Thus, when a specific function is used from a program on the image information apparatus by using the middleware, it can be used by the same procedure without paying attention to whether the specific function exists on the image information apparatus or on the UM.

Besides, in the image information system according to this embodiment, the user interface framework for creating the user interface application operating on the virtual machine to realize the same function as the UM is installed, the middleware group for each function having the same function as the UM and/or the OS having the same function as the UM are installed, the user interface framework and/or the application for each image information apparatus created by using the middleware group is installed, the OS installed in the image information apparatus and the OS installed in the UM are transparently connected, and/or the middleware installed in the image information apparatus and the middleware installed in the UM are transparently connected, and/or the virtual machine installed in the image information apparatus, the virtual machine installed in the user interface framework and the UM, and the user interface framework are transparently connected, so that the application is created at the level of application creation data without paying attention to the difference between the image information apparatus and the UM. Thus, when the user interface application is created on the image information apparatus, it can be created without paying attention to the structure of the hardware in which the application is executed.

Further, since the software structures of the image information apparatus and the UM are made consistent, when the function realized at the UM side is transferred to the image information apparatus side in future, the operation can be easily performed.

Besides, the image information system according to this embodiment includes, as the middleware group for each function, the middleware for performing the image pickup and display processing, and/or the middleware for performing the Internet communication protocol processing corresponding to IPv6, and/or the middleware for performing the universal plug and play processing, and/or the middleware for performing the image distribution and storage processing based on the MPEG2/MPEG4/MPEG7/MPEG21 standards. Thus, by adding the UM to the image information apparatus, it becomes possible to easily add the image pickup and display, network connection, and image distribution and storage function.

Besides, in the image information system according to the invention, since the application and the HAL are selectively used according to the kind of the system, the image information apparatus with different uses can be constructed without changing the hardware structure of the UM.

### Second Embodiment

In this embodiment, a description will be given to an example in which a UM 12 is applied to a cellular phone.

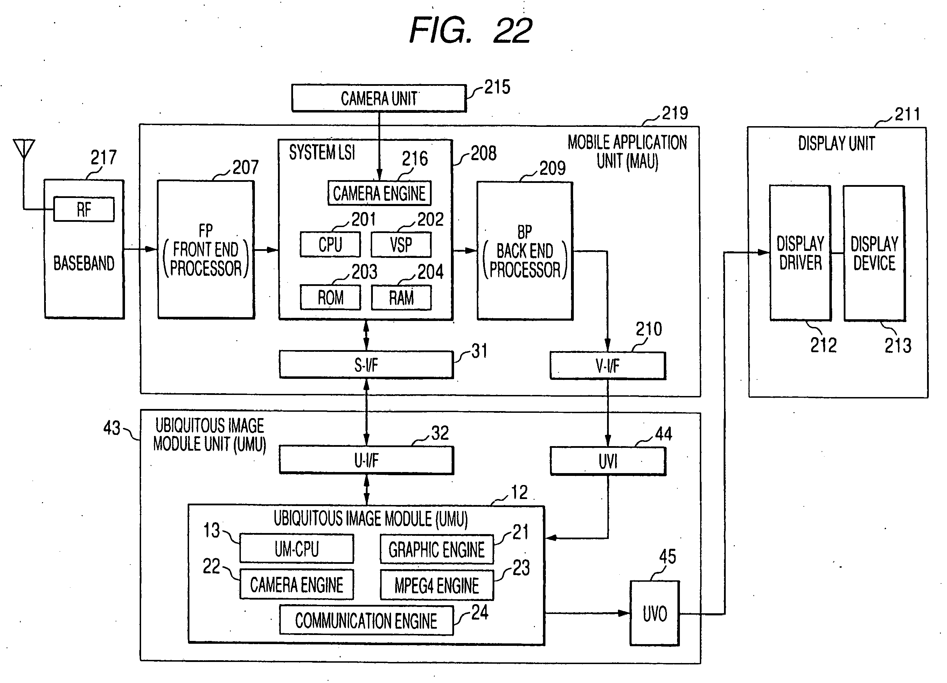

Fig. 22 is a system structural view of a cellular phone in which a UMU 43 is applied to the conventional cellular phone apparatus explained in Fig. 45. Although a mobile application unit 219 of Fig. 22 is the same as the mobile application unit 219 of Fig. 45, the basic structure will be first described again.

Data inputted through an antenna 218 from a not-shown cellular phone wireless network is signal processed by a baseband part 217, communication header information is removed, and it is reconstructed. Further, it is converted by the mobile application unit 219 into a signal form in which display can be performed on a display device 211, and is outputted to the display unit 211. Of course, although there is also a structural block relating to input/output of sound, the illustration is omitted here, and in the following description, the processing of image information will be mainly described.

The mobile application unit 219 includes a system LSI 208, an FP 207 of the system LSI 208, a BP 209 of the system LSI 208, and a V-I/F 210.

The data inputted to the mobile application unit 219 is decoded and resized by software of a CPU 201 and hardware of a VSP 202, and is outputted from the V-I/F 210 to a UVI 44. Incidentally, the UVI 44 is a video (image) input terminal of the UMU 43, and forms an interface connectable to the V-I/F 210 as an image output terminal of the mobile application unit 219. The data inputted from the UVI 44 is processed by respective engines in the UMU 43, is inputted from a UVO 45 to the display unit 212 and is displayed. Incidentally, the UVO 45 is an image output signal terminal of the UMU 43, and is connected to an input interface of the display unit 211.

Besides, data inputted to the mobile application unit 219 from a camera unit 215 connected to the outside is data processed by a camera engine 216, and is reconstructed as image data by the first CPU 301 and the VSP 202, and then, there is a case where it is further processed by the UM 43 and is displayed on the display unit 211, a case where it is further compression processed and is stored in a nonvolatile memory such as a flush memory, or a case where it is further multiplexed and is transmitted to the not-shown wireless network from the baseband part 217.

The mobile application unit 219 is communication means in the invention, for performing data communication by connecting to the cellular phone network connectable to the Internet.

The data of the data communication includes image information.

In the case where the number of pixels of the camera unit 215 mounted in the cellular phone is raised, there is a case where processing data is increased, and the camera engine 216 can not handle. In the structure of Fig. 22, since the UMU 43 is applied, a camera engine 22 mounted in a higher performance UM 12 can be used for the control of the camera unit 215. The UMU 43 is not developed for only the cellular phone, and includes the sufficient performance camera engine so that it can also be used for the respective equipments of Fig. 1, for example, the monitor camera 8 and the DVD recorder 7. When the camera unit is changed, the number of pixels of the mobile application unit can be increased without redesigning a dedicated LSI.

As stated above, according to the UM described in this embodiment, in the mobile application unit including the cellular phone, since the function expansion and change of the network can be realized without newly developing the system LSI, there are effects that a reduction in development cost, and a reduction of loss of business chance by shortening the development period can be realized.

Besides, in the case where the UM is made such a shape that it can be inserted and removed, it can be used general-purposely for various equipments by exchanging it with a ubiquitous image module including a necessary newest function relating to the network. As a result, being able to achieve the reduction in the development cost and shortening at the development period, and being bring out the product with the price competitiveness in a shorter term become possible. Therefore, a decrease in the business opportunity can be prevented.

Further, when the interface of the UM is general-purposely formed, it is not necessary to change the function and circuit of the mobile application unit, and accordingly, there are effects that a reduction in software development cost, an improvement in reliability and the like are obtained.

Further, by adding the UM to an existing developed product, there are effects that an improvement in function and the addition of a new function can be realized without changing software significantly.

### Third Embodiment

In the embodiment, the connection between the image information apparatus and UMU described in the above embodiment will be further described in more detail.

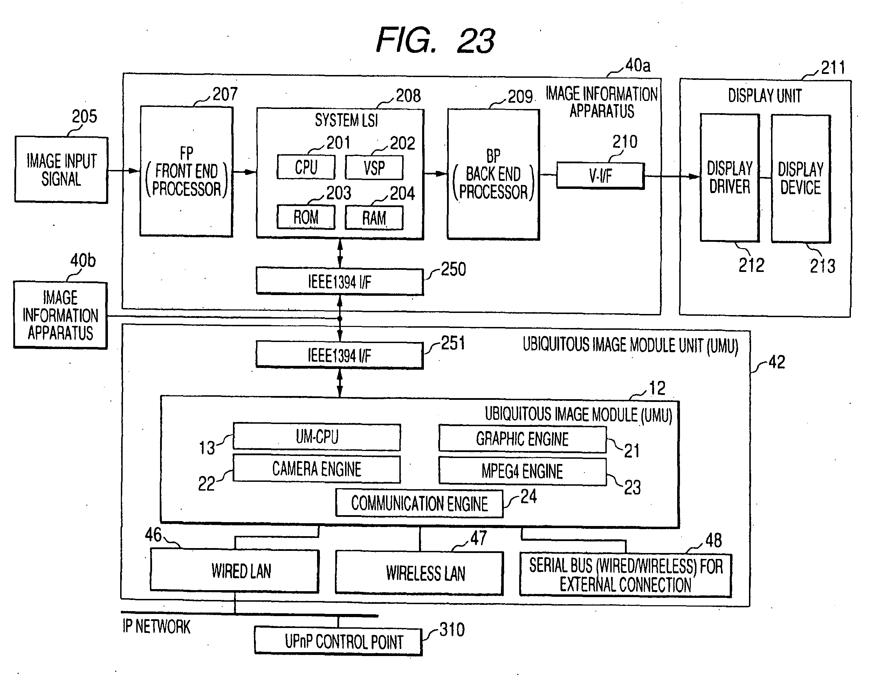

Fig. 23 shows a structural example in the case where each of an S-I/F 31 and a U-I/F 32 is used as an I/F of an IEEE 1394 serial bus, and an image information apparatus and a UMU are connected through an IEEE 1394 network. That is, both apparatuses are connected through an IEEE 1394 1/F 250 of an image information apparatus 40a and an IEEE 1394 1/F 251 of a UMU 42. In the IEEE 1394 network, plural equipments can be connected in one network. Accordingly, as shown in the drawing, there is also a case where plural image information apparatuses such as an image information apparatus 40b in addition to the image information apparatus 40a are connected. Incidentally, in Fig. 23, although the connection line branches and is depicted, the actual connection between the respective apparatuses is achieved in a topology in accordance with IEEE 1394.

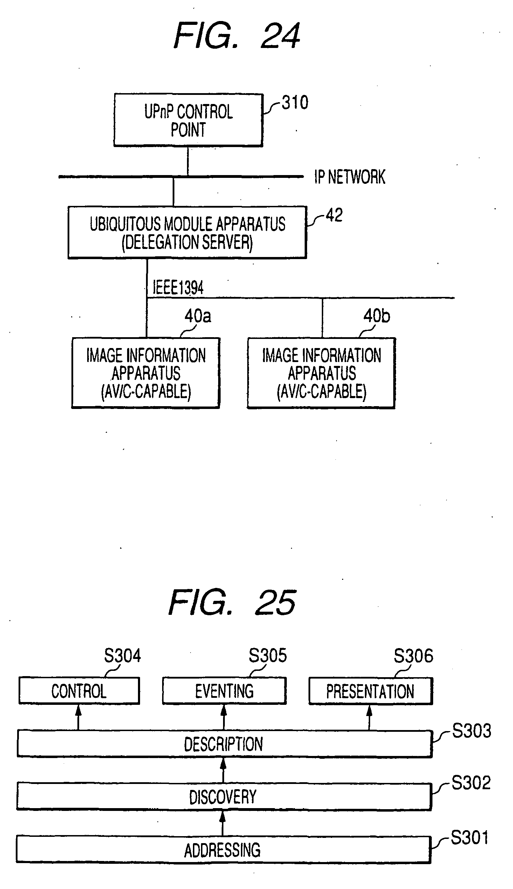

The UMU 42 is connected to an Internet Protocol network (hereinafter referred to as an "IP network") through a wired LAN interface 46 such as inthernet. Incidentally, in addition to the wired LAN, a wireless LAN such as IEEE 802.11a/b/g may be used. A UPnP Control Point (hereinafter referred to as a "UPnP control point") 310 having a UPnP Control Point function is connected to the IP network. Incidentally, the UPnP Control Point function means the function to control another UPnP device connected to the IP network. Actually, the UPnP control point is installed in a personal computer or the like, and the operation of the device is made to be performed. Fig. 24 schematically shows the connection form in this embodiment. In the drawing, the UMU operates as a delegation server for connecting the IP network and the IEEE 1394 network. Besides, a UPnP control point on the IP network operates an IEEE 1394 equipment existing on the IEEE 1394 network and having no UPnP function. That is, in this embodiment, a description will be given to a method in which the UPnP control point on the IP network operates the image information apparatus having no UPnP function and existing on the IEEE 1394 network through the UMU operating as the delegation server.

Incidentally, the IP network corresponds to the network 1 of Fig. 1. Accordingly, in the following, there is a case where the IP network is written as a first network, and the IEEE 1394 network is written as a second network.

### <Operation of UPnP control point and device>

First, the operation of the UPnP control point and the device defined in the UPnP standards will be described. First, a general operation step of the UPnP control point and the device defined in the UPnP standards will be described. In the UPnP standards, as shown in Fig. 25, six kinds of operation steps in total are defined: addressing of acquiring an IP address; discovery in which the UPnP control point detects and recognizes the device; description of acquiring information relating to the device; control of controlling the device; eventing of detecting the state change of the device; and presentation of performing the operation and setting of the device by using a Web browser. Hereinafter, the details of the respective operation steps will be described.

An addressing S301 as the first step in UPnP is a step in which a device having entered the IP network automatically acquires an IP address. As the protocol of the addressing S301, Dynamic Host Configuration Protocol (hereinafter referred to as "DHCP") is basically used. Incidentally, in the case where the IP network does not support the DHCP, AutoIP may be used.

After the IP address acquisition by the addressing S301 is ended, advance is made to a discovery S302 as a next step. The discovery S302 is a step in which the UPnP control point detects and recognizes the device on the IP network. The discovery S302 includes two kinds: an advertise operation in which a device newly added to the IP network performs advertising to the UPnP control point; and a search operation in which a UPnP control point newly added to the IP network searches a device. The operation content of the former is such that the added device multicasts an advertise message for advertising. The operation content of the latter is such that the UPnP control point multicasts a search message for search and the relevant device returns a search response message to the UPnP control point. Incidentally, in both the operations, Simple Service Discovery Protocol (hereinafter referred to as "SSDP") is used as the protocol.

After the UPnP control point recognizes the device in the discovery S302, advance is made to a description S303 as a next step. The description S303 is a step in which the UPnP control point acquires detailed information relating to the device. The UPnP control point can obtain the information of each device by a URL described in the advertise message or the search response message. Incidentally, by referring to the URL of the advertise message or the search response message, it becomes possible to acquire a device description in which a model name, a serial number, a manufacturer name, service information and the like are described.

At the time point when the operation step of the description S303 is completed, the UPnP control point can know the content of the service which the device as the object of the control and operation has.

A control S304 is an operation step in which the UPnP control point actually controls the device. The UPnP control point transmits a message including an action request to the device based on a list of command, action, service, parameter of each action and argument described in the service description. Incidentally, as a protocol of transmission of the message including the action request, SOAP is used. That is, the UPnP control point uses the SOAP to transmit control commands described in XML format to the device. The device performs the service requested as the action, and returns the result of execution of the action to the UPnP control point.

An eventing S305 is an operation step in which the UPnP control point detects the state change of the device. In the case where the state variable of the service owned by the device itself is changed, the device notifies the state change to the subscribed UPnP control point. As the protocol of the message including the state change, Generic Event Nortification Architecture (hereinafter referred to as "GENA") is used, and the message itself is described in XML format.

A presentation S306 is an operation step in which a Web browser is used to perform the operation and setting of the device. In the case where the device as the object of the operation and setting has a user interface function supporting the HTML format, by accessing the presentation URL described in the device description, it becomes possible to display the presentation screen by using the Web browser. Then, it becomes possible for the user to operate the device by using the presentation screen.

The above are the general operations of the UPnP control point and the device defined in the UPnP standards.

### <Structure and operation of AV equipment>

Next, hereinafter, the structure and operation of an AV equipment defined in the UPnP standards will be especially described.

In the UPnP standards, interfaces to be installed and functions are defined as Device Control Protocol (hereinafter referred to as "DCP") for each device type. The DCP of the AV equipment is Media Server and Media Renderer.

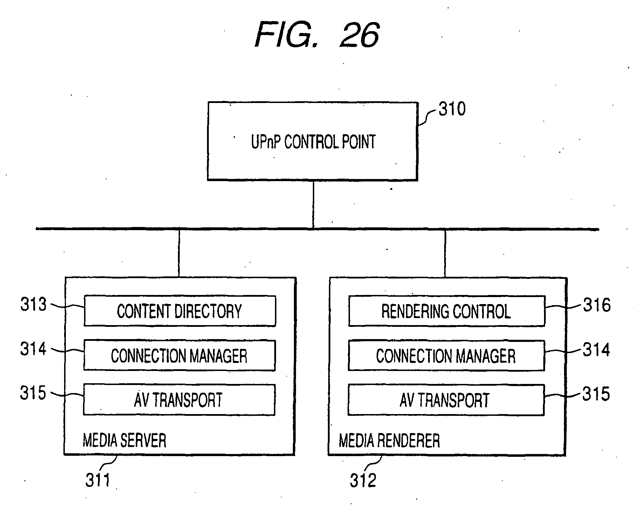

Fig. 26 shows UPnP AV architecture. As shown in the drawing, the UPnP AV architecture is a model in which the UPnP control point 310 controls a Media Server (hereinafter referred to as "media server") 311 and a Media Renderer (hereinafter referred to as "media renderer") 312.

The media server 311 is a device which stores content, search the stored content, and sends the content meeting a retrieval condition to the media renderer 312, and is a device mainly including a function of storing content and sending data streaming. For example, a playback apparatus such as a VTR or a DVD can be supposed to be the media server 311. The media server 311 includes respective services of a Content Directory Service (hereinafter referred to as "content directory service", and referred to as "CDS" in the drawing) 313, a Connection Manager (hereinafter referred to as "connection manager", and referred to as " CM " in the drawing) 314, and an AV Transport (hereinafter referred to as "AV transport", and referred to as "AVT" in the drawing) 315.

The media renderer 312 is a device used for rendering the content acquired from the IP network, and is a device mainly including a function of rendering content such as displaying an image and/or outputting sound and a function of receiving data stream. For example, an image display device to display a file of MPEG format can be supposed to be the media renderer 312. The media renderer 312 includes respective services of a Rendering Control (hereinafter referred to as "rendering control") 316, a connection manager 314, and an AV transport 315.

The content directory 313 is a service of providing such an action set that the UPnP control point 310 can enumerate the content supplied from the equipment including the media server 311. Accordingly, by using the content directory 313, it becomes possible for the UPnP control point 310 to browse the content hierarchy, to execute attribute search, to acquire metadata of content of attributes such as title, author and URL, and to perform operation of the content such as creation and deletion of the content.

The connection manager 314 is a service of providing an action set to manage connection relating to a specific device. Accordingly, by using the connection manager 314, it becomes possible for the UPnP control point 310 to enumerate the protocol of streaming and data format, and to enumerate the present connection state.

The rendering control 316 is a service of providing an action set to enable the UPnP control point 310 to control how a renderer (equipment including the media renderer 312 device) render the content. Accordingly, by using the rendering control 316, it becomes possible for the UPnP control point 310 to control the brightness of a video image, contrast, volume of sound, mute and the like.

The AV transport 315 is a service of providing an action set to enable the UPnP control point 310 to perform the playback control of content. Accordingly, by using the AV transport 315, it becomes possible for the UPnP control point 310 to perform playback control of play, stop, seek and the like of content.

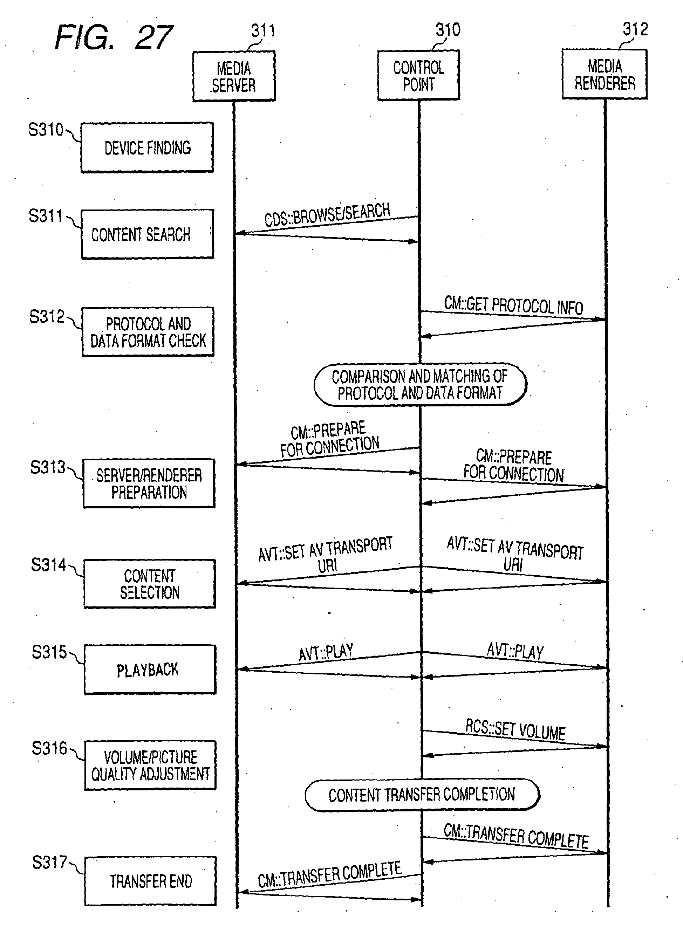

Next, Fig. 27 shows a general playback flow of content in the UPnP AV architecture. Hereinafter, the details of each step will be described.

A device finding S310 as a first step is a step of finding a device on the IP network. The device finding S310 is performed in the discovery S302 and the description S303 of the UPnP operation steps. After the device finding S310 is completed, it becomes possible for the UPnP control point 310 to recognize and control the media server 311 and the media renderer 312.

A first step in the actual content playback is a content search S311. The content search S311 is a step in which the UPnP control point 310 uses the content directory 313 of the media server 311 to search the content. That is, the UPnP control point 310 uses SOAP to transmit a message including "Browse" or "Search" action request to the media server 311. As the response, the media server 311 returns information including the hierarchical structure of content, transfer protocol data, and data format to the UPnP control point 310. After the UPnP control point 310 receives the response, advance is made to a protocol data format check S312 as a next step.

The protocol data format check S312 is a step in which the UPnP control point 310 uses the connection manager 314 of the media renderer 312 to acquire the information of the transfer protocol of content and the format supported by the media renderer 312. That is, the UPnP control point 310 uses SOAP to transmit a message including "GetProtocolInfo" action request to the media renderer 312. As the response, the media renderer 312 returns the information including a list of supported transfer protocol data of content and data format to the UPnP control point 310.

After the UPnP control point 310 receives the response, the UPnP control point 310 compares the transfer protocol data and the data format based on the information obtained in the protocol data format check S312 and the information obtained in the content search S311. From the comparison result, the appropriate transfer protocol data and data format are determined. In the case where the transfer protocol data of content and data format in the media server 311 are in conformity with the transfer protocol data of content and the data format supported by the media renderer 312, the content can be renderd by the media renderer 312. Thereafter, advance is made to a server/render preparation S313 as a next step.

The server/renderer preparation S313 is a step in which the UPnP control point 310 uses the connection manager 314 to notify the media server 311 and the media renderer 312 that connection by the transfer protocol data and the data format determined in the protocol data format check S312 is created. That is, the UPnP control point 310 uses SOAP to transmit a message including "PrepareForConnection" action to the media server 311. As the response, the media server 311 returns "AV Transport InstanceID" to the UPnP control point 310. Besides, the UPnP control point 310 uses SOAP to transmit the message including "PrepareForConnection" action to the media renderer 312 as well. As the response, the media renderer 312 returns "AV Transport InstanceID" or "Rendering Control InstanceID" to the UPnP control point 310. After the UPnP control point 310 receives the response, advance is made to a content selection S314 as a next step.

The content selection S314 is a step in which the UPnP control point 310 uses the AV transport 315 service to notify the information of content transferred by the selection of the user to the media server 311 and the media renderer 312. That is, the UPnP control point 310 uses SOAP to transmit a message including "SetAVTransportURI" action to the media server 311. Similarly, a message of "SetAVTranportURI" action using SOAP is transmitted to the media renderer 312 as well. Thereafter, advance is made to a playback S315 as a step of actually performing reproduction control of content.

The playback S315 is a step in which the UPnP control point 310 uses the AV transport 315 service and uses SOAP to issue instructions of actual playback control, such as "Play", "Stop" and "seek", to the media server 311 and the media renderer 312. That is, when the UPnP control point 310 transmits, for example, the message of "Play" action to the media server 311 and the media renderer 312, the playback of the content is started. In the case where the playback of the content is desired to be stopped, the "Stop" action is transmitted to the media server 311 and the media renderer 312.

A volume/picture quality adjustment S316 is a step in which the UPnP control point 310 uses the rendering control 316 service to perform volume adjustment and picture quality adjustment of the renderer during the playback of the content. For example, in the case where the volume adjustment is performed, the UPnP control point 310 transmits a message of "SetVolume" action to the media renderer 312. As a result, the volume is changed. After the transfer of the content is finally completed, advance is made to a transfer completion S317 as a next step.

The transfer completion S317 is a step in which the UPnP control point 310 uses the connection manager 314 to perform an end processing of the connection between the UPnP control point 310 and the media server 311 and the connection between the UPnP control point 310 and the media renderer 312. That is, the UPnP control point 310 uses SOAP to transmit a message including "ConnectionComplete" action to the media renderer 312, and receives a response thereto. Similarly, a message including "ConnectionComplete" action is transmitted to the media server 311 and a response thereto is received. The series of content playback is completed through the above steps.

The above is the operation of the UPnP control point and the device in the UPnP AV architecture.

### <Operation of image information apparatus by UPnP control point>

Next, a description will be given to a method in which as shown in Fig. 23, the UPnP control point 310 on the IP network actually operates the image information apparatus 40a having no UPnP function and existing on the IEEE 1394 network through the UMU 42 operating as a delegation server.

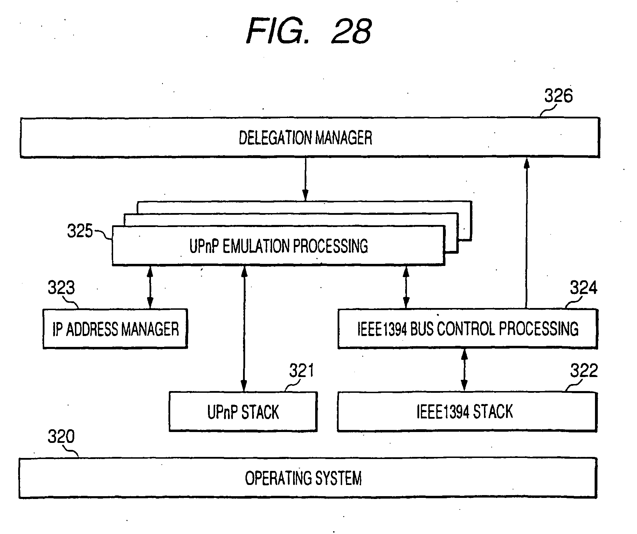

First, the software structure of the UMU will be described. Fig. 28 is a view showing the software structure in the UMU 42.

A UPnP stack 321 is a software group to perform processing of a UPnP protocol, and includes, for example, an HTTP server to handle a GET request of standard HTTP, an HTTP parser to interpret the header of an HTTP message, an XML parser, a module group to handle protocols of SOAP, GENA and SSDP, and the like. That is, the UPnP stack 321 performs the processing of communication by the UPnP protocol.

An IEEE 1394 stack 322 is a software group to handle transaction of IEEE 1394, AV protocols such as Function Control Protocol (hereinafter referred to as "FCP"), and IEEE 1394 relevant protocol of AV/C commands and the like. That is, the IEEE 1394 stack 322 performs the processing of communication by the IEEE 1394 protocol.

A delegation manager 326 is software having such function that in the case where the IEEE 1394 equipment such as, for example, the image information apparatus 40a is connected to the IEEE 1394 network, a UPnP emulation processing 325 is started based on the information of the IEEE 1394 equipment, or in the case where the IEEE 1394 equipment is disconnected from the network, the UPnP emulation processing 325, which was started correspondingly to the IEEE 1394 equipment, is ended.

The UPnP emulation processing 325 is software which is started as an independent process by the delegation manager 326 correspondingly to each IEEE 1394 equipment connected to the IEEE 1394 network. That is, it has a function to execute each UPnP step instead of a device so that the IEEE 1394 equipment is made to act as one UPnP device. Accordingly, the UPnP emulation processing 325 is started as a process corresponding to the IEEE 1394 equipment connected to the IEEE 1394 network. Then, the number of times the UPnP emulation processing 325 is started is equal to the number of the IEEE 1394 equipments connected to the IEEE 1394 network.

An IEEE 1394 bus control processing is software having a function to monitor the state of the IEEE 1394 equipment, and performs, in addition to the notification of information of connection and disconnection of the IEEE 1394 equipment to the delegation manager 326, delivery of AV/C command data received from the IEEE 1394 to the UPnP emulation processing 325, transmission of AV/C command data received from the UPnP emulation processing 325 to the IEEE 1394 equipment, and the like.

An IP address manager 323 is software having a function to assign an IP address to each IEEE 1394 equipment emulated by the UPnP emulation processing 325.

Next, a description will be given to the operation of the software in the UMU 42 in the respective UPnP operation steps described in the embodiment 4.

At first, a description will be given to the operation of the software in the addressing S301. This step is a step in which an IEEE 1394 equipment newly added to the IEEE 1394 network is virtually regarded as a device on the IP network, and an IP address given from the DHCP server is assigned.

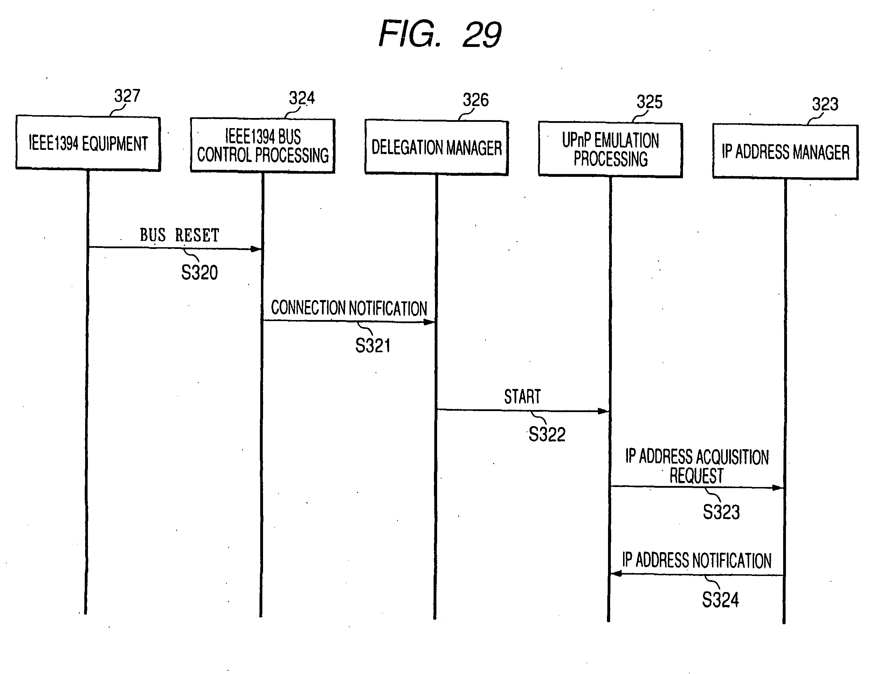

Fig. 29 is a view showing the sequence of the operation of the software in the UMU in the addressing S301. First, at step S320, a bus reset occurs by ON of the power source of the IEEE 1394 equipment 327, or the connection of the new IEEE 1394 equipment 327 to the IEEE 1394 network. The IEEE 1394 bus control processing 324 having detected the bus reset through the IEEE 1394 stack 322 performs, at step S321, connection notification to inform the delegation manager 326 that the IEEE 1394 equipment 327 is newly connected to the network. The delegation manager 326 having received the connection notification starts, at step S322, the UPnP emulation processing 325 corresponding to the newly connected IEEE 1394 equipment 327. The UPnP emulation processing 325 started at step S322 always operates correspondingly to the IEEE 1394 equipment as the origin of the connection notification in all subsequent UPnP steps. That is, in the case where plural IEEE 1394 equipments are connected to the IEEE 1394 network, the UPnP emulation processing 325 corresponding to each IEEE 1394 equipment 327 in one-to-one relation is started for each IEEE 1394 equipment. Next, the started UPnP emulation processing 325 makes, at step S323, an IP address acquisition request to the IP address manager 323. The IP address manager 323 makes a request to the DHCP server for an IP address to be virtually assigned to the IEEE 1394 equipment 327, and notifies, at step S324, the thus given IP address to the UPnP emulation processing 325. Incidentally, as means of the addressing S301, AutoIP may be used in addition to DHCP.

Next, the operation of the software in the discovery S302 will be described. This step is a step in which the UPnP control point detects and recognizes the IEEE 1394 equipment through the UPnP emulation processing.

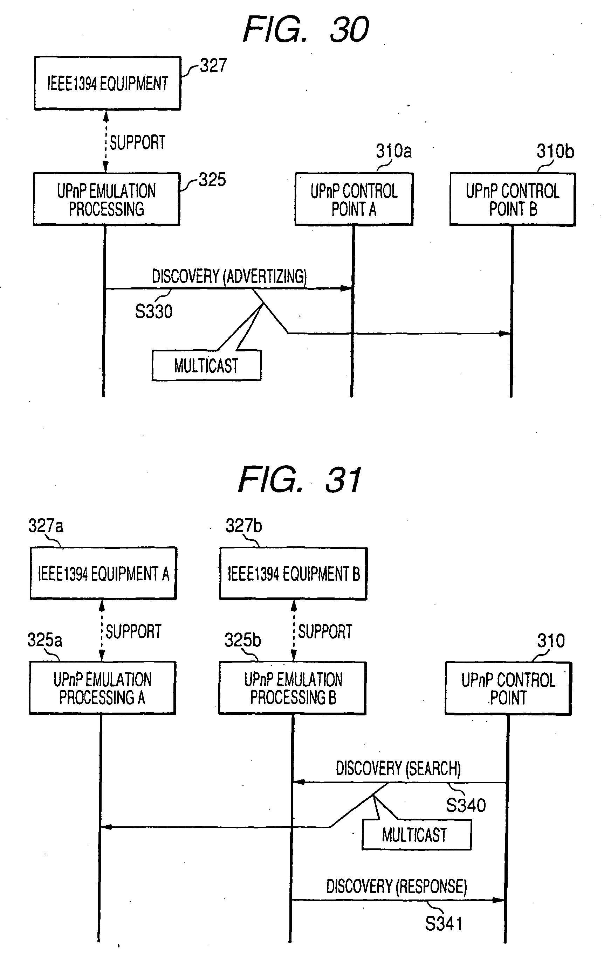

Fig. 30 shows a sequence of the operation of the software in the UMU in the discovery S302 in the case where a newly added device performs an advertise operation to the UPnP control point 310. Incidentally, Fig. 30 shows a case where two UPnP control points 310a and 310b exist on the IP network. First, at step S330, an UPnP emulation processing 325 already started correspondingly to an IEEE 1394 equipment 327 uses SSDP to multicast an advertise message. After receiving this message, the UPnP control point A310a and the UPnP control point B310b recognize the UPnP emulation processing 325 as a UPnP device. That is, the UPnP control point A310a and the UPnP control point B310b recognize the IEEE 1394 equipment 327 through the UPnP emulation processing 325.

Fig. 31 shows a sequence of the operation of the software in the UMU in the discovery S302 in the case where a newly added control point performs a search operation to retrieve a device. Incidentally, Fig. 31 shows a case where two IEEE 1394 equipments 327a and 327b exist on the IEEE 1394 network. First, at step S340, the UPnP control point 310 uses SSDP to multicast a search message onto the IP network. Each of a UPnP emulation processing 325a corresponding to the IEEE 1394 equipment 327a and a UPnP emulation processing 325b corresponding to the IEEE 1394 equipment 327b, which has received the message, detects whether the IEEE 1394 equipment corresponding itself has a function corresponding to the service or device indicated in the condition of the search message, and in the case where it has the function, at step S341, a response message is transmitted to the UPnP control point 310. The drawing shows the case where the IEEE 1394 equipment 327b corresponding to the UPnP emulation processing 325b has the function corresponding to the service or the device indicated in the condition of the search message. The UPnP control point 310 having received the response message recognizes, through the UPnP emulation processing 325, the IEEE 1394 equipment 327b as the device conforming to the condition of the search performed by itself.

Next, the operation of the software in the description S303 will be described. This step is a step in which the UPnP control point acquires the detailed information relating to the IEEE 1394 equipment through the UPnP emulation processing.

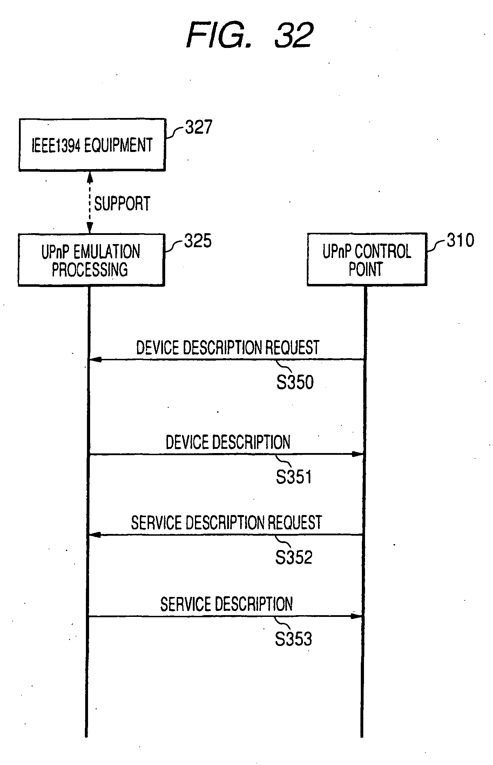

Fig. 32 is a view showing a sequence of the operation of the software in the UMU in the description S303. First, at step S350, the UPnP control point 310 uses a URL described in the advertise message or the search response message to make a request for a device description to the UPnP emulation processing 325 corresponding to the IEEE 1394 equipment 327. Incidentally, the protocol used at step S350 is HTTP. Next, the UPnP emulation processing 325 creates device information relating to the IEEE 1394 equipment 327 in XML format, and transmits it to the UPnP control point 310 at step S351. In the case where the URL for acquisition of the service description is recited in the service list of the device description at step S351, the UPnP control point 310 further makes a request for the service description to the UPnP emulation processing 325 at step S352. In response to the request for the service description at step S352, the UPnP emulation processing 325 creates, as the service description, the service information relating to the IEEE 1394 equipment 327 in XML format, and transmits it to the UPnP control point 310 at step S353. Incidentally, the request for the device description at S350 and the transmission of the device description at S351 are performed by the number of devices included in the IEEE 1394 equipment 327 corresponding to the UPnP emulation processing 325. Similarly, the request for the service description at S352 and the transmission of the service description at S353 are performed by the number of services included in the IEEE 1394 equipment 327 corresponding to the UPnP emulation processing 325. By this step, the UPnP control point recognizes the services and devices included in the IEEE 1394 equipment through the UPnP emulation processing.

Next, the operation of the software in the control S304 will be described. This step is a step in which the UPnP control point controls the IEEE 1394 equipment through the UPnP emulation processing.

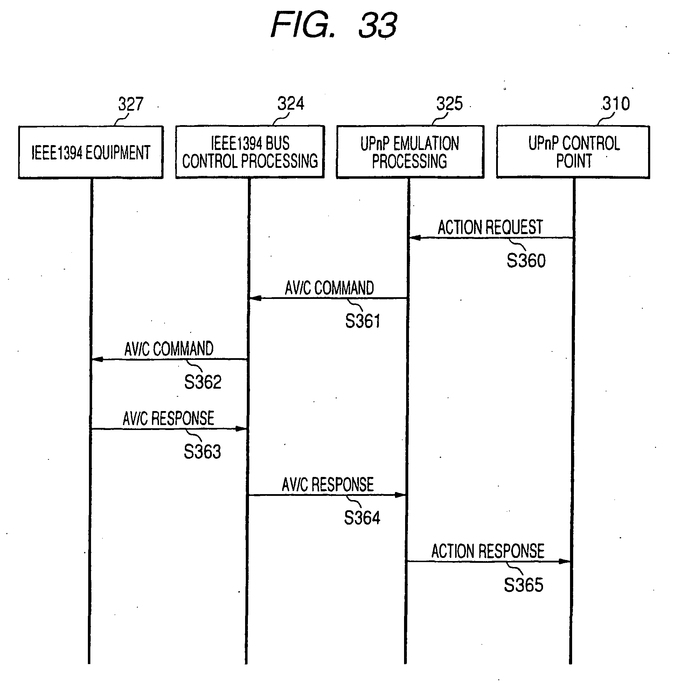

Fig. 33 shows a sequence of the operation of the software in the UMU in the control S304. First, at step S360, the UPnP control point 310 uses SOAP to make an action request to the UPnP emulation processing 325. The UPnP emulation processing 325 converts the received UPnP action request into an AV/C command corresponding to the action request, and transmits it to the IEEE 1394 bus control processing 324 at step S361. At step S362, the IEEE 1394 bus control processing 324 transmits the AV/C command to the IEEE 1394 equipment 327. The IEEE 1394 equipment 327 performs an operation in accordance with the received AV/C command. After the operation is ended, at step S363, the IEEE 1394 equipment 327 transmits an AV/C response to the IEEE 1394 bus control processing 324. At step S364, the IEEE 1394 bus control processing 324 transmits the received AV/C response to the UPnP emulation processing 325 corresponding to the IEEE 1394 equipment 327 as the transmission origin of the response. After converting the AV/C response into a UPnP action response, the UPnP emulation processing 325 uses SOAP to transmit it to the UPnP control point 310 at step S365. By the reception of the action response, the UPnP control point 310 recognizes that the action request issued by itself has been executed.

Next, the operation of the software in the eventing S305 will be described. This step is a step in which the UPnP control point detects a state change of the IEEE 1394 equipment through the UPnP emulation processing.

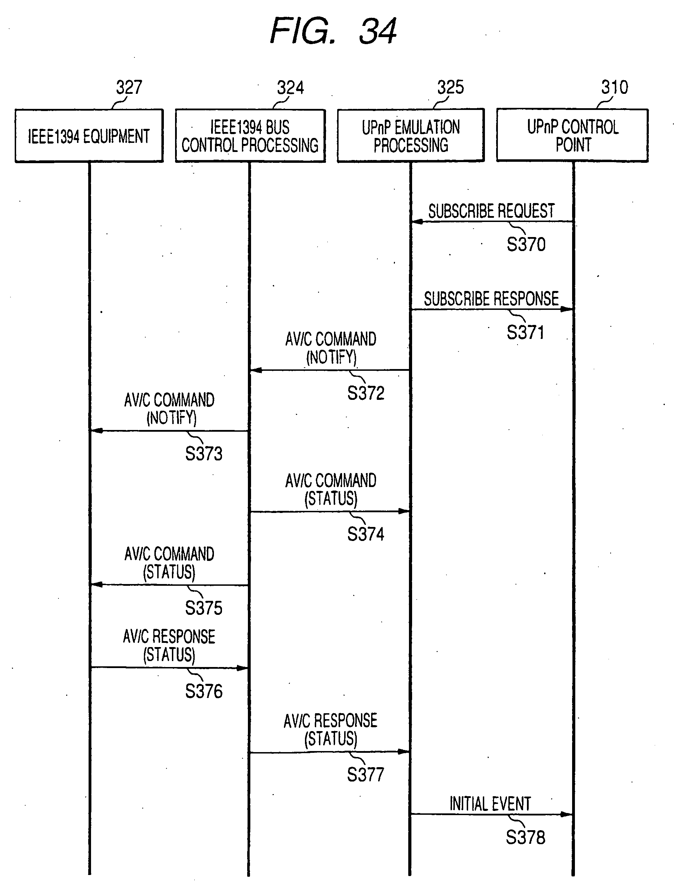

Fig. 34 shows a sequence of the operation of the software in the UMU in the eventing S305 in the case where the UPnP control point 310 performs a subscribe operation to make a request to the UPnP device for a state change notification. First, at step S370, the UPnP control point 310 uses GENA to make a subscribe request to the UPnP emulation processing 325. In response to the subscribe request, the UPnP emulation processing 325 adds a UPnP control point 310 into a subscriber list, and then, returns a subscribe response to the UPnP control point 310 at step S371. Thereafter, at step S372, the UPnP emulation processing 325 transmits an AV/C command "Notify" to request the IEEE 1394 bus control processing 324 to notify the state change. At step S373, the IEEE 1394 bus control processing 324 transmits the AV/C command "Notify" to the IEEE 1394 equipment 327. By this, in the case where there is a state change of the IEEE 1394 equipment, it becomes possible for the UPnP control point to detect the state change through the UPnP emulation processing. Further, at step S374, the UPnP emulation processing 325 transmits an AV/C command "Status" to inquire of the IEEE 1394 bus control processing 324 about the present state to the IEEE 1394 bus control processing 324. At step S375, the IEEE 1394 bus control processing 324 transmits the AV/C command "Status" to the IEEE 1394 equipment 327. In response to the AV/C command "Status", at step S376, the IEEE 1394 equipment 327 transmits the present state as an AV/C response "Status" to the IEEE 1394 bus control processing 324. At step S377, the IEEE 1394 bus control processing 324 transmits the received AV/C response "Status" to the UPnP emulation processing 325 corresponding to the IEEE 1394 equipment 327 as the transmission origin of the response. The UPnP emulation processing 325 converts the AV/C response "Status" into a UPnP initial event, and uses GENA to transmit it to the UPnP control point 310 at step S378. By this, through the UPnP emulation processing 325, it becomes possible for the UPnP control point 310 to know the initial state of the IEEE 1394 equipment 327 having made the subscribe request.

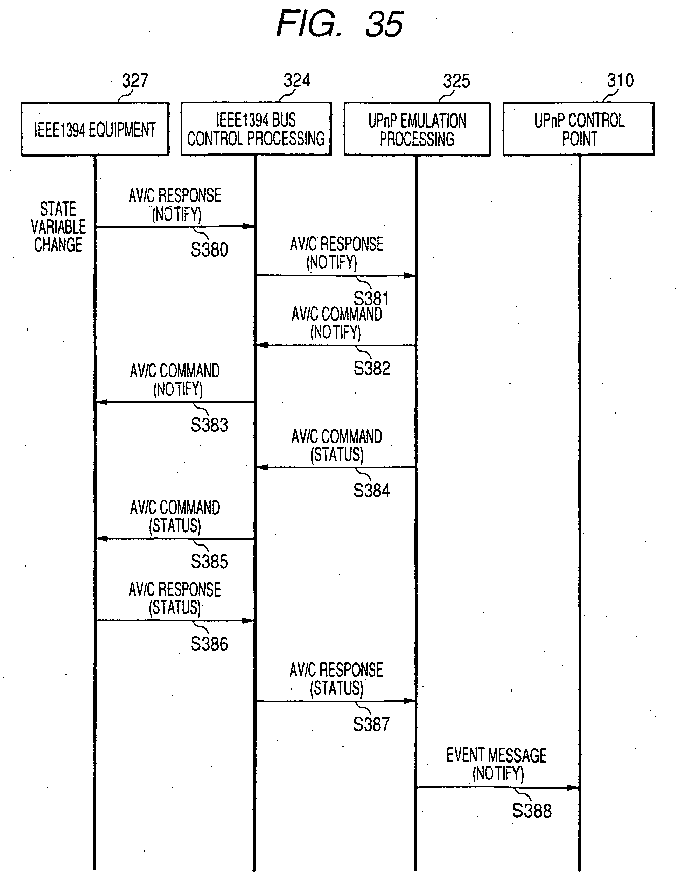

Fig. 35 shows a sequence of the operation of the software in the case where a change of a state variable occurs in the IEEE 1394 equipment 327. First, in the case where the change of the state variable occurs in the IEEE 1394 equipment 327 receiving an AV/C command "Notify", at step S380, the IEEE 1394 equipment 327 transmits an AV/C response "Notify" to the IEEE 1394 bus control processing 324. At step S381, the IEEE 1394 bus control processing 324 transmits the received AV/C response "Notify" to the UPnP emulation processing 325 corresponding to the IEEE 1394 equipment 327 as the transmission origin of the response. At step S382, the UPnP emulation processing 325 again transmits an AV/C command "Notify" to the IEEE 1394 bus control processing 324 in preparation for a next change of a state variable of the IEEE 1394 equipment 327 emulated by itself. At step S383, the IEEE 1394 bus control processing 324 transmits the AV/C command "Notify" to the IEEE 1394 equipment 327. Thereafter, at S384, the UPnP emulation processing 325 transmits an AV/C command "Status" to inquire of the IEEE 1394 bus control processing 324 about the present state of the IEEE 1394 equipment 327 to the IEEE 1394 bus control processing 324. At step S385, the IEEE 1394 bus control processing 324 transmits the AV/C command "Status" to the IEEE 1394 equipment 327. In response to the AV/C command "Status", at step S386, the IEEE 1394 equipment 327 transmits the present state as an AV/C response "Status" to the IEEE 1394 bus control processing 324. At step S387, the IEEE 1394 bus control processing 324 transmits the received AV/C response "Status" to the UPnP emulation processing 325 corresponding to the IEEE 1394 equipment 327 as the transmission origin of the response. The UPnP emulation processing 325 converts the AV/C response "Status" into a UPnP event message "NOTIFY", and uses GENA to transmit it to the UPnP control point 310 at step S388. By this, it becomes possible for the UPnP control point 310 to know the state change of the IEEE 1394 equipment 327 having made the subscribe request.

### <Operation of software in UMU>

Next, a description will be given to an actual operation of the software in the UMU 42 shown in Fig. 26 at the respective steps of the playback flow of the content shown in Fig. 27.

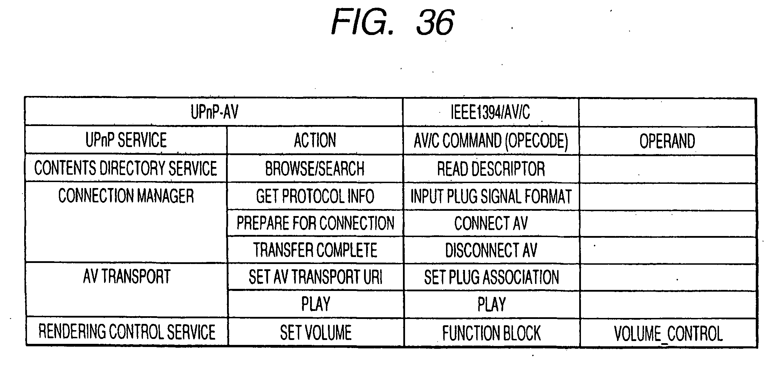

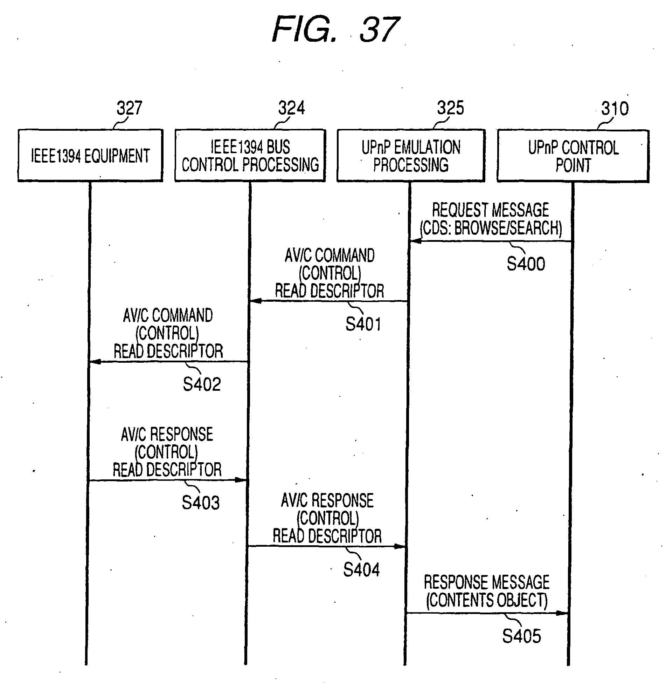

First, the operation of the software in the content search S311 will be described. Fig. 37 is a view showing a sequence of the operation of the software in the content search S311. First, at step S400, the UPnP control point 310 uses SOAP to transmit a message including "Browse" or "Search" action request to the UPnP emulation processing 325. The UPnP emulation processing 325 already started correspondingly to the IEEE 1394 equipment receives the transmitted message through the UPnP stack 321. The UPnP emulation processing 325 having received the message uses a correspondence table between UPnP services and AV/C commands shown in Fig. 36 to convert the "Browse" or "Search" action into "READ DESCRIPTOR" of the AV/C command, and transmits it to the IEEE 1394 bus control processing 324 at step S401. At step S402, the IEEE 1394 bus control processing 324 transmits the AV/C command "READ DESCRIPTOR" to the IEEE 1394 equipment 327 through the IEEE 1394 stack. At step S403, the IEEE 1394 equipment 327 having received the AV/C command returns an AV/C response including information of the hierarchical structure of content included by itself, transfer protocol data and data format to the IEEE 1394 bus control processing 324. At S404, the IEEE 1394 bus control processing 324 transmits the received AV/C response to the UPnP emulation processing 325 as the transmission origin of the AV/C command. The UPnP emulation processing 325 uses the corresponding table between the UPnP services and the AV/C command shown in Fig. 36 to convert it into a UPnP response message, and returns it to the UPnP control point 310 through the UPnP stack 321 at S405. By this step, the UPnP control point 310 recognizes the information of the hierarchical structure of the content of the IEEE 1394 equipment 327, the transfer protocol data, and the data format.

Incidentally, the issuance of the AV/C command "READ DESCRIPTOR" actually requires such a series of procedures that "OPEN DESCRIPTOR" sub-function "READ OPEN" is executed before "READ DESCRIPTOR", and "OPEN DESCRIPTOR" sub-function "CLOSE" is issued after "READ DESCRIPTOR". Besides, according to required information, there is a case where "READ INFO BLOCK" command is used instead of "READ DESCRIPTOR", or there is a case where a combination of the respective procedures is used.

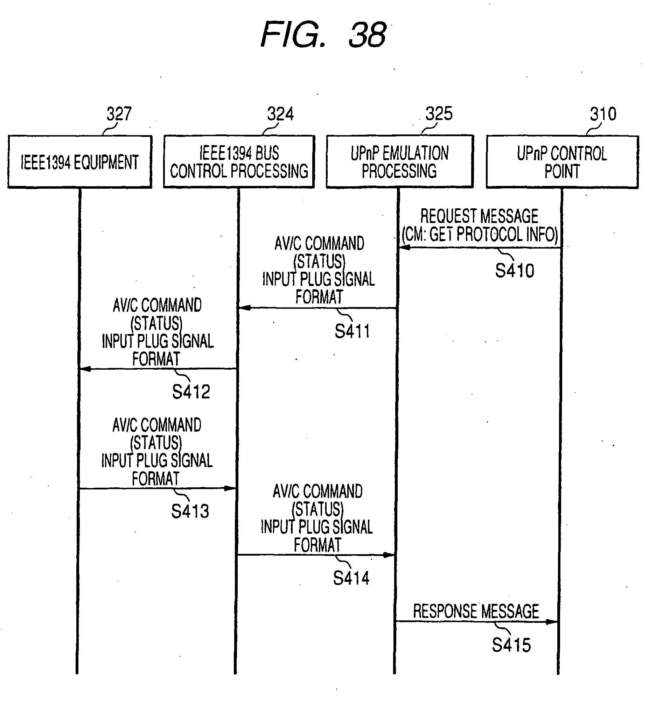

Next, the operation of the software in the protocol data format check S312 will be described. Fig. 38 is a view showing a sequence of the operation of the software in the protocol data format check S312. First, at step S410, the UPnP control point 310 uses SOAP to transmit a message including "GetProtocolInfo" action request to the UPnP emulation processing 325. The UPnP emulation processing 325 already started correspondingly to the IEEE 1394 equipment receives the transmitted message through the UPnP stack 321.

The UPnP emulation processing 325 having received the message uses the correspondence table between the UPnP services and the AV/C commands shown in Fig. 36 to convert the "GetProtocolInfo" action as the UPnP service into Status of "INPUT PLUG SIGNAL FORMAT" of the AV/C command, and transmits it to the IEEE 1394 bus control processing 324 at step S411. At step S412, the IEEE 1394 bus control processing 324 transmits the Status of the AV/C command "INPUT PLUG SIGNAL FORMAT" to the IEEE 1394 equipment 327 through the IEEE 1394 stack. At S413, the IEEE 1394 equipment 327 having received the AV/C command returns an AV/C response including information of transfer protocol data supported by itself and data format to the IEEE 1394 bus control processing 324 through the IEEE 1394 stack. At S414, the IEEE 1394 bus control processing 324 transmits the received AV/C response to the UPnP emulation processing 325 as the transmission origin of the AV/C command. The UPnP emulation processing 325 uses the correspondence table between the UPnP services and the AV/C command shown in Fig. 36 to convert it into a UPnP response message, and transmits it to the UPnP control point 310 through the UPnP stack 321 at S415. By this, the UPnP control point 310 recognizes the information of the transfer protocol data supported by the IEEE 1394 equipment 327 and the data format.

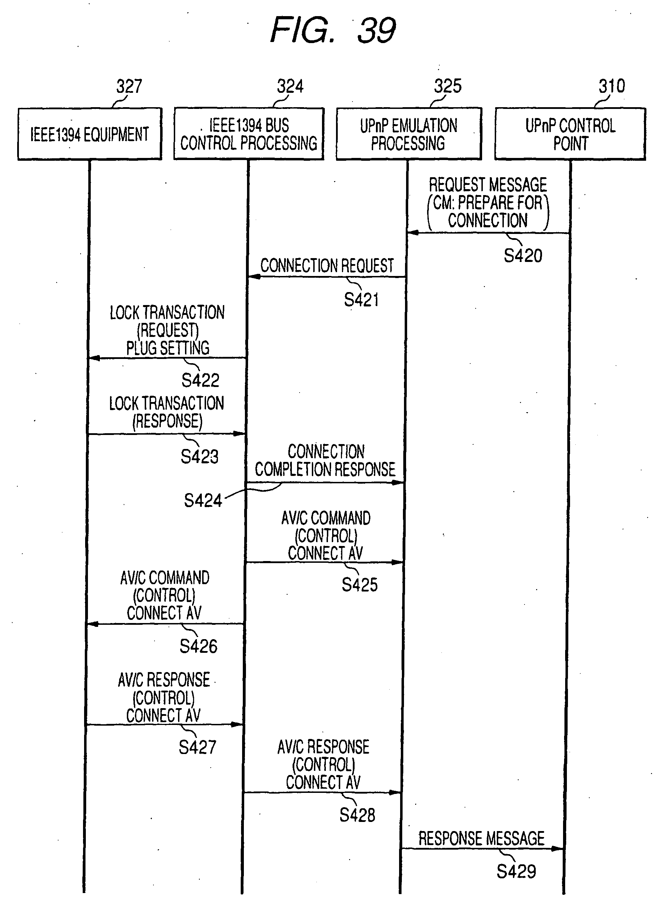

Next, the operation of the software in the server/renderer preparation S313 will be described. Fig. 39 is a view showing a sequence of the operation of the software in the server/render preparation S313. First, at step S420, the UPnP control point 310 uses SOAP to transmit a message including "PrepareForConnection" action to the UPnP emulation processing 325. The UPnP emulation processing 325 already started correspondingly to the IEEE 1394 equipment receives the transmitted message through the UPnP stack 321. At S421, the UPnP emulation processing 325 having received the message makes a connection request to the IEEE 1394 bus control processing 324. At step S422, the IEEE 1394 bus control processing 324 transmits a plug setting request by lock transaction to the IEEE 1394 equipment 327 through the IEEE 1394 stack. The IEEE 1394 equipment 327 having received this lock transaction creates a physical connection. After creation of the connection, at S423, the result of the plug setting by the lock transaction is transmitted to the IEEE 1394 bus control processing 324 through the IEEE 1394 stack. At S424, the IEEE 1394 bus control processing 324 transmits a connection completion response to the UPnP emulation processing 325 as the transmission origin of the AV/C command. The UPnP emulation processing 325 having received the connection completion response uses the correspondence table between the UPnP services and the AV/C commands shown in Fig. 36 to convert the "PrepareForConnection" action of the UPnP service into "CONNECT AV" of the AV/C command, and transmits it to the IEEE 1394 bus control processing 324 at step S425. At step S426, the IEEE 1394 bus control processing 324 transmits "CONNECT AV" to the IEEE 1394 equipment 327 through the IEEE 1394 stack. The IEEE 1394 equipment 327 having received this AV/C command actually creates a connection which enables transmission/reception of data between itself and the other device, and then, returns an AV/C response including the creation result to the IEEE 1394 bus control processing 324 through the IEEE 1394 stack at step S427. At S428, the IEEE 1394 bus control processing 324 transmits the received AV/C response to the UPnP emulation processing 325 as the transmission origin of the AV/C command. The UPnP emulation processing 325 uses the correspondence table between the UPnP services and the AV/C command shown in Fig. 36 to convert it into a UPnP response message, and transmits it to the UPnP control point 310 through the UPnP stack 321 at S429. By this, it becomes possible to transmit/receive content to/from the IEEE 1394 equipment 327.

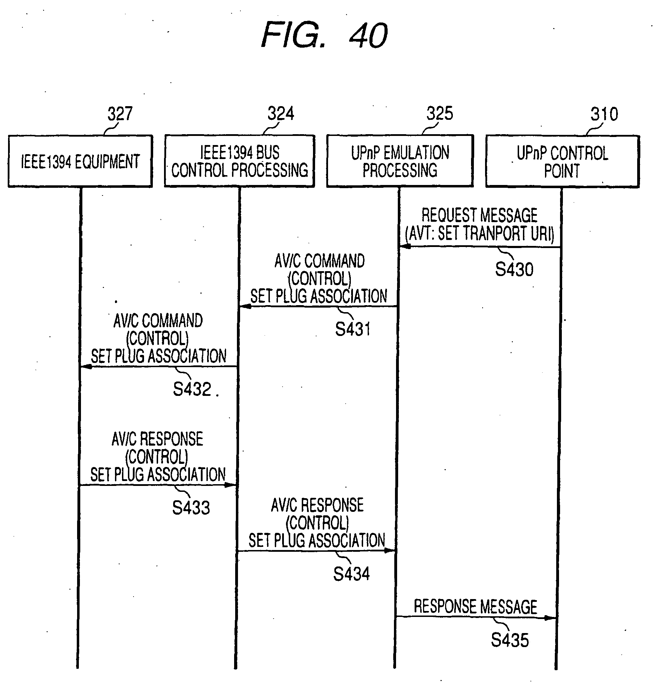

Next, the operation of the software in the content selection S314 will be described. Fig. 40 is a view showing a sequence of the operation of the software in the content selection S314. First, the user selects content to be reproduced in the next reproduction S315. Thereafter, at step S430, the UPnP control point 310 uses SOAP to transmit a message including "SetTransportURI" action request to the UPnP emulation processing 325. The UPnP emulation processing 325 already started correspondingly to the IEEE 1394 equipment receives the transmitted message through the UPnP stack 321. The UPnP emulation processing 325 having received the message uses the correspondence table between the UPnP services and the AV/C commands shown in Fig. 36 to convert the "SetTransportURI" action of the UPnP service into "SET PLUG ASSOCIATION" of the AV/C command, and transmits it to the IEEE 1394 bus control processing 324 at step S431. At step S432, the IEEE 1394 bus control processing 324 transmits the "SET PLUG ASSOCIATION" to the IEEE 1394 equipment 327 through the IEEE 1394 stack. At S433, the IEEE 1394 equipment 327 having received this AV/C command returns an AV/C response including the selected content to the IEEE 1394 bus control processing 324 through the IEEE 1394 stack. At S434, the IEEE 1394 bus control processing 324 transmits the received AV/C response to the UPnP emulation processing 325 as the transmission origin of the AV/C command. The UPnP emulation processing 325 uses the correspondence table between the UPnP services and the AV/C command shown in Fig. 36 to convert it into a UPnP response message, and transmits it to the UPnP control point 310 through the UPnP stack 321 at S435. By this, the UPnP control point 310 recognizes the content selected by the user.

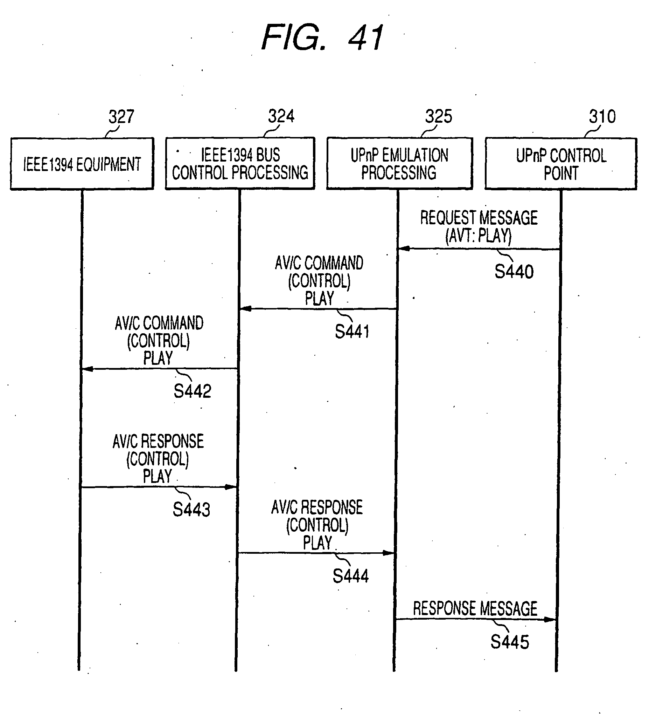

Next, the operation of the software in the playback S315 will be described. Fig. 41 is a view showing a sequence of the - operation of the software in the playback S315. First, at step S440, the UPnP control point 310 uses SOAP to transmit a message including "Play" action request to the UPnP emulation processing 325. The UPnP emulation processing 325 already started correspondingly to the IEEE 1394 equipment 327 receives the transmitted message through the UPnP stack 321. The UPnP emulation processing 325 having received the message uses the correspondence table between the UPnP services and the AV/C commands shown in Fig. 36 to convert the "Play" action of the UPnP service into "PLAY" of the AV/C command, and transmits it to the IEEE 1394 bus control processing 324 at step S441. At step S442, the IEEE 1394 bus control processing 324 transmits the AV/C command "PLAY" to the IEEE 1394 equipment 327 through the IEEE 1394 stack. The IEEE 1394 equipment 327 having received the AV/C command starts to play the content. Thereafter, at S443, an AV/C response including information of the start of the content playback is returned to the IEEE 1394 bus control processing 324 through the IEEE 1394 stack. At S444, the IEEE 1394 bus control processing 324 transmits the received AV/C response to the UPnP emulation processing 325 as the transmission origin of the AV/C command. The UPnP emulation processing 325 uses the correspondence table between the UPnP services and the AV/C command shown in Fig. 36 to convert it into a UPnP response message, and transmits it to the UPnP control point 310 through the UPnP stack 321 at S445. By this, it becomes possible for the UPnP control point 310 to recognize that the content reproduction is started in the IEEE 1394 equipment 327.

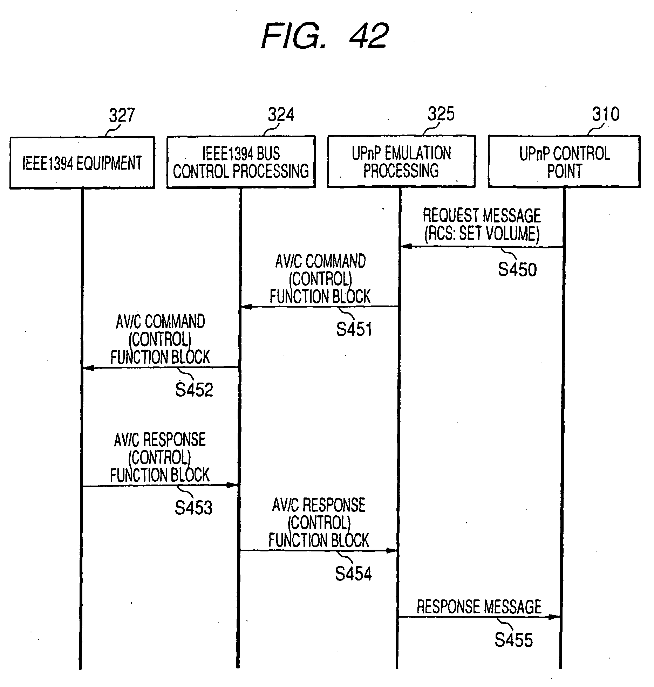

Next, the operation of the software in the volume/picture quality adjustment S316 will be described. Fig. 42 is a view showing a sequence of the operation of the software in the volume/picture quality adjustment S316. First, at step S450, the UPnP control point 310 uses SOAP to transmit a message including a "SetVolume" action request to the UPnP emulation processing 325. The UPnP emulation processing 325 already started correspondingly to the IEEE 1394 equipment 327 receives the transmitted message through the UPnP stack 321. The UPnP emulation processing 325 having received the message uses the correspondence table between the UPnP services and the AV/C commands shown in Fig. 36 to convert the "SetVolume" action of the UPnP service into "FUNCTION BLOCK" of the AV/C command, and transmits it to the IEEE 1394 bus control processing 324 at step S451. At step S452, the IEEE 1394 bus control processing 324 transmits the AV/C command "FUNCTION BLOCK" to the IEEE 1394 equipment 327 through the IEEE 1394 stack. The IEEE 1394 equipment 327 having received the AV/C command adjusts the volume. Thereafter, at S453, an AV/C response including information relating to the adjusted volume is returned to the IEEE 1394 bus control processing 324 through the IEEE 1394 stack. At S454, the IEEE 1394 bus control processing 324 transmits the received AV/C response to the UPnP emulation processing 325 as the transmission origin of the AV/C command. The UPnP emulation processing 325 uses the correspondence table between the UPnP services and the AV/C command shown in Fig. 36 to convert it into a UPnP response message, and transmits it to the UPnP control point 310 through the UPnP stack 321 at S455. By this, it becomes possible for the UPnP control point 310 to recognize that the volume is adjusted in the IEEE 1394 equipment 327.

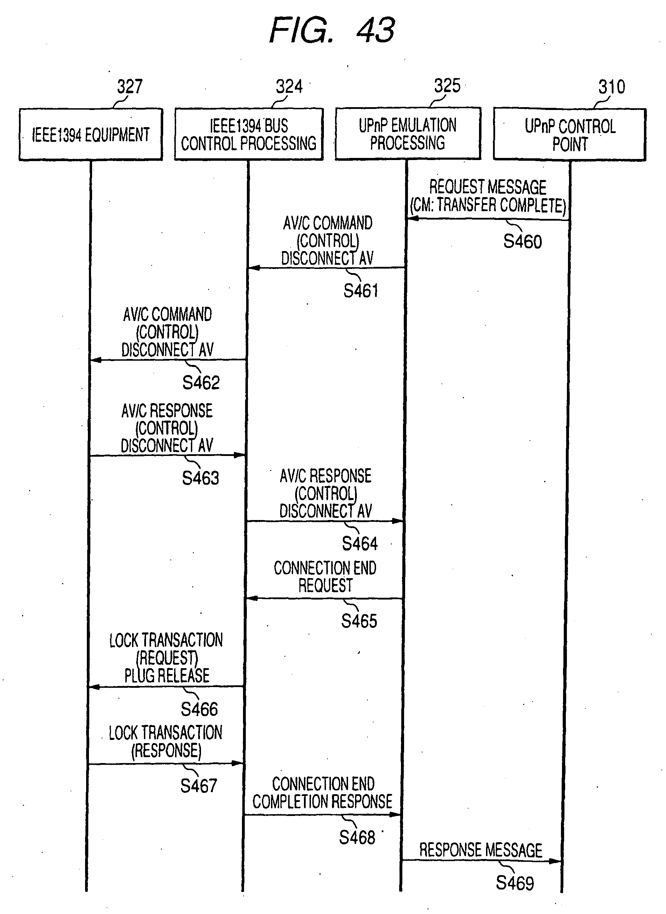

Finally, the operation of the software in the transfer completion S317 will be described. Fig. 43 is a view showing a sequence of the operation of the software in the transfer completion S317. First, at step S460, the UPnP control point 310 uses SOAP to transmit a message including a "TransferComplete" action request to the UPnP emulation processing 325. The UPnP emulation processing 325 already started correspondingly to the IEEE 1394 equipment 327 receives the transmitted message through the UPnP stack 321. The UPnP emulation processing 325 having received the message uses the correspondence table between the UPnP services and the AV/C commands shown in Fig. 36 to convert the "TransferComplete" action of the UPnP service into "DISCONNECT AV" of the AV/C command, and transmits it to the IEEE 1394 bus control processing 324 at step S461. At step S462, the IEEE 1394 bus control processing 324 transmits the AV/C command "DISCONNECT AV" to the IEEE 1394 equipment 327 through the IEEE 1394 stack. The IEEE 1394 equipment 327 having received the AV/C command releases its own connection. Thereafter, at S463, an AV/C response including information of the release of the connection is returned to the IEEE 1394 bus control processing 324 through the IEEE 1394 stack. At S464, the IEEE 1394 bus control processing 324 transmits the received AV/C response to the UPnP emulation processing 325 of the transmission origin of the AV/C command. At step S465, the UPnP emulation processing 325 having received the connection release response transmits a connection end request to the IEEE 1394 bus control processing 324 in order to further release the physical connection. At S466, the IEEE 1394 bus control processing 324 having received the connection end request transmits a plug release request by the lock transaction to the IEEE 1394 equipment 327 through the IEEE 1394 stack. The IEEE 1394 equipment 327 having received this message releases the physical connection. Thereafter, at S467, lock transaction response including information of the release of the physical connection is returned to the IEEE 1394 bus control processing 324 through the IEEE 1394 stack. At S468, the IEEE 1394 bus control processing 324 transmits the received AV/C response to the UPnP emulation processing 325 of the transmission origin of the AV/C command. The UPnP emulation processing 325 uses the correspondence table between the UPnP services and the AV/C command shown in Fig. 36 to convert it into a UPnP response message, and transmits it to the UPnP control point 310 through the UPnP stack 321 at S469. By this, it becomes possible for the UPnP control point 310 to recognize that the connection of the IEEE 1394 equipment 327 is released.

According to the operation method as described above, it becomes possible for the UPnP control point on the IP network to operate the IEEE 1394 equipment existing on the IEEE 1394 network and having no UPnP function. That is, by using the UMU 42, it becomes possible to operate the apparatus, such as the image information apparatus 40a or 40b, which exists on the IEEE 1394 network and has no UPnP function. Besides, according to the operation method described in this embodiment, since it is not necessary that the UPnP control point previously recognizes the unit and the subunit of the IEEE 1394 equipment connected to the IEEE 1394 network, the addition and deletion of the IEEE 1394 equipment, and the addition and deletion of the UPnP control point can be easily performed. Besides, in the case where the IEEE 1394 network is already constructed, the UPnP control point exists on the IP network, and it is desired that the IEEE 1394 equipment is operated from this UPnP control point, when the UMU described in this embodiment is used, the operation becomes possible without changing the structure of the existing IEEE 1394 network and the IP network. That is, it is not necessary to use a UPnP control point incorporating software which can understand and convert both the AV/C command used in the IEEE 1394 network and the UPnP action.

That is, when the UMU described in this embodiment is used, it becomes possible to operate the equipment on the second network from the equipment on the first network without using an equipment incorporating a new LSI. That is, even in the case where the respective equipments exist on the networks different from each other in the command system for equipment operation, it becomes possible to operate the equipments on the networks without newly providing an intermediate equipment incorporating a system LSI which can understand and change both the command systems.

### Industrial Applicability

Since the invention is constructed as described above, effects as described below are obtained.

That is, even if the specifications and functions required for an equipment are changed, it is not necessary that a system LSI meeting the request for the change of the specifications and functions is newly developed, and it becomes possible to provide an image equipment in which the expansion and change of the function can be easily performed.

## Claims

1. A system comprising an image information apparatus (40) including a first central processing unit (201) and a connection interface (31) to connect a module unit (42) including a second central processing unit (13) to control the first central processing unit (201), **characterized in that**:
each of the first central processing unit (201) and the second central processing unit (13) comprises respective plural control hierarchies defining a coupling state between the image information apparatus (40) and the module unit (42); and
the second central processing unit (13) of the module unit (42) is arranged to transmit control information corresponding to a layer in the control hierarchies of the second central processing unit (13) to a respective layer in the control hierarchies of the first central processing unit (201) based on the coupling state, to control the image information apparatus (40).

2. The system according to claim 1, wherein the second central processing unit (13) of the module unit (42) is further arranged to transmit control information corresponding to a higher layer in the control hierarchies of the second central processing unit (13) to a lower layer in the control hierarchies of the first central processing unit (201), to control the image information apparatus (40).

3. The system according to claim 1 or 2, wherein the respective plural control hierarchies of each of the image information apparatus (40) and the module unit (42) includes an operating system layer (221, 102), and transfer of data is performed between the respective operating systems (221, 102).

4. The system according to claim 1 or 2, wherein the respective plural control hierarchies of each of the image information apparatus (40) and the module unit (42) includes a middleware (222, 112), and transfer of data is performed between the respective middlewares (222, 112).

5. The system according to claim 1 or 2, charactewherein the respective plural control hierarchies of each of the image information apparatus body (40) and the module unit (42) includes an application (225, 110), and transfer of data is performed between the respective applications (225, 110).

6. The system according to claim 1 or 2, wherein the respective plural control hierarchies of each of the image information apparatus body (40) and the module unit (42) includes an interprocess communication communicator (71, 74), and transfer of data is performed between the interprocess communication communicators.

7. The system according to claim 1, wherein the module unit (42) further comprises:
first communication means connected to a first network and for communicating with an equipment (310) connected to the first network;
second communication means connected to a second network and for communicating with an equipment (40a, 40b) connected to the second network; and
means for outputting an IP address in the first network.

8. The system according to claim 7, wherein the module unit (42) is further arranged to start a program (325) corresponding to the equipment (40a, 40b) connected to the second network, and to make the program emulate the equipment (40a, 40b) corresponding to the IP address.

9. The system according to claim 8, wherein the first communication means is arranged to transmit the IP address to the equipment (310) connected to the first network.

10. The system according to claim 8 or 9, wherein the module unit (42) further comprises correspondence relation acquisition means for acquiring a correspondence relation between a command of the first network and a command of the second network, and
wherein the first communication means is arranged to receive a command to the IP address transmitted from the equipment (310) connected to the first network,
the emulation program (325) is arranged to use the correspondence relation acquisition means to convert the command into a command in the second network, and
the second communication means is arranged to transmit the command after the conversion to the equipment (40a, 40b) emulated by the program.

11. The system according to claim 10, wherein:
the second communication means is further arranged to receive a command execution result transmitted from the equipment (40a, 40b) connected to the second network,
the emulation program (325) is arranged to use the correspondence relation acquisition means to convert the command execution result into a command execution result in the first network, and
the first communication means is arranged to transmit the command execution result to the equipment (310) that transmitted the command and is connected to the first network.

12. The system according to any one of claims 6 to 11, wherein
the first network is a UPnP network, and
the second network is an IEEE1394 network.

13. The system according to claim 12, wherein the IP address is an IP address given from a DHCP server or an IP address acquired in AutoIP.

14. A computer readable medium comprising instructions which, when executed by a suitable apparatus, cause the apparatus to become configured as the image information apparatus or the module unit in the system of any one of claims 1 to 13.

## Patentansprüche

1. System mit einer Bildinformationsvorrichtung (40), die einen ersten Hauptprozessor (201) und eine Anschlussschnittstelle (31) aufweist, um eine Moduleinheit (42) anzuschließen, die einen zweiten Hauptprozessor (13) aufweist, um den ersten Hauptprozessor (201) zu steuern, **dadurch gekennzeichnet, dass**:
sowohl der erste Hauptprozessor (201) als auch der zweite Hauptprozessor (13) entsprechende mehrfache Steuerungshierarchien umfassen, die einen Kopplungszustand zwischen der Bildinformationsvorrichtung (40) und der Moduleinheit (42) festlegen; und
der zweite Hauptprozessor (13) der Moduleinheit (42) eingerichtet ist, Steuerungsinformationen, die einer Schicht in den Steuerungshierarchien des zweiten Hauptprozessors (13) zugeordnet sind, an eine entsprechende Schicht in den Steuerungshierarchien des ersten Hauptprozessors (201) auf der Grundlage des Kopplungszustandes zu übermitteln, um die Bildinformationsvorrichtung (40) zu steuern.

2. System nach Anspruch 1, wobei der zweite Hauptprozessor (13) der Moduleinheit (42) ferner eingerichtet ist, Steuerungsinformationen, die einer höheren Schicht in den Steuerungshierarchien des zweiten Hauptprozessors (13) zugeordnet sind, an eine niedrigere Schicht in den Steuerungshierarchien des ersten Hauptprozessors (201) zu übermitteln, um die Bildinformationsvorrichtung (40) zu steuern.

3. System nach Anspruch 1 oder 2, wobei die entsprechenden mehrfachen Steuerungshierarchien sowohl der Bildinformationsvorrichtung (40) als auch der Moduleinheit (42) eine Betriebssystemschicht (221, 102) aufweisen und die Datenübertragung zwischen den entsprechenden Betriebssystemen (221, 102) erfolgt.

4. System nach Anspruch 1 oder 2, wobei die entsprechenden mehrfachen Steuerungshierarchien sowohl der Bildinformationsvorrichtung (40) als auch der Moduleinheit (42) eine Middleware (222, 112) aufweisen und die Datenübertragung zwischen den entsprechenden Middlewares (222, 112) erfolgt.

5. System nach Anspruch 1 oder 2, wobei die entsprechenden mehrfachen Steuerungshierarchien sowohl der Bildinformationsvorrichtung (40) als auch der Moduleinheit (42) eine Anwendung (225, 110) aufweisen und die Datenübertragung zwischen den entsprechenden Anwendungen (225, 110) erfolgt.

6. System nach Anspruch 1 oder 2, wobei die entsprechenden mehrfachen Steuerungshierarchien sowohl der Bildinformationsvorrichtung (40) als auch der Moduleinheit (42) einen Interprozess-Kommunikationskommunikator (71, 74) aufweisen und die Datenübertragung zwischen den Interprozess-Kommunikationskommunikatoren erfolgt.

7. System nach Anspruch 1, wobei die Moduleinheit (42) ferner umfasst:
ein erstes Kommunikationsmittel, das an ein erstes Netzwerk angeschlossen ist und der Kommunikation mit einer Ausrüstung (310) dient, die an das erste Netzwerk angeschlossen ist;
ein zweites Kommunikationsmittel, das an ein zweites Netzwerk angeschlossen ist und der Kommunikation mit einer Ausrüstung (40a, 40b) dient, die an das zweite Netzwerk angeschlossen ist; und
ein Mittel zum Ausgeben einer IP-Adresse im ersten Netzwerk.

8. System nach Anspruch 7, wobei die Moduleinheit (42) ferner eingerichtet ist, ein Programm (325) zu starten, das zugehörig ist zur Ausrüstung (40a, 40b), die an das zweite Netzwerk angeschlossen ist, und um zu erreichen, dass das Programm die Ausrüstung (40a, 40b), die zu der IP-Adresse gehört, emuliert.

9. System nach Anspruch 8, wobei das erste Kommunikationsmittel eingerichtet ist, die IP-Adresse an die Ausrüstung (310), die an das erste Netzwerk angeschlossen ist, zu übermitteln.

10. System nach Anspruch 8 oder 9, wobei die Moduleinheit (42) ferner ein Korrespondenzbeziehungs-Beschaffungsmittel aufweist, um eine Korrespondenzbeziehung zwischen einem Befehl des ersten Netzwerks und einem Befehl des zweiten Netzwerks zu beschaffen, und
wobei das erste Kommunikationsmittel eingerichtet ist, einen Befehl an die IP-Adresse zu empfangen, der von der Ausrüstung (310), die an das erste Netzwerk angeschlossen ist, übermittelt wurde,
das Emulationsprogramm (325) eingerichtet ist, das Korrespondenzbeziehungs-Beschaffungsmittel zu nutzen, um den Befehl in einen Befehl im zweiten Netzwerk umzuwandeln, und
das zweite Kommunikationsmittel eingerichtet ist, den Befehl nach der Umwandlung an die Einrichtung (40a, 40b), die durch das Programm emuliert wurde, zu überMitteln.

11. System nach Anspruch 10, wobei:
das zweite Kommunikationsmittel ferner eingerichtet ist, ein Befehlsausführungsergebnis zu empfangen, das von der Ausrüstung (40a, 40b), die an das zweite Netzwerk angeschlossen ist, übermittelt wurde,
das Emulationsprogramm (325) eingerichtet ist, das Korrespondenzbeziehungs-Beschaffungsmittel zu nutzen, um das Befehlsausführungsergebnis in ein Befehlsausführungsergebnis im ersten Netzwerk umzuwandeln, und
das erste Kommunikationsmittel eingerichtet ist, das Befehlsausführungsergebnis an die Ausrüstung (310) zu übermitteln, das den Befehl übermittelt hat und an das erste Netzwerk angeschlossen ist.

12. System nach einem der Ansprüche 6 bis 11, wobei
das erste Netzwerk ein UPnP-Netzwerk ist und
das zweite Netzwerk ein IEEE1394-Netzwerk ist.

13. System nach Anspruch 12, wobei die IP-Adresse eine IP-Adresse ist, die von einem DHCP-Server oder einer IP-Adresse geliefert wurde, die in AutoIP beschafft wurde.

14. Computerlesbares Medium, das Anweisungen enthält, die bei Ausführung durch eine geeignete Vorrichtung die Vorrichtung veranlassen, als Bildinformationsvorrichtung oder Moduleinheit in dem System nach einem der Ansprüche 1 bis 13 konfiguriert zu werden.

## Revendications

1. Système comprenant un appareil d'information d'image (40) qui comprend une première unité centrale de traitement (201) et une interface de connexion (31) de façon à connecter une unité de module (42) qui comprend une seconde unité centrale de traitement (13) de façon à commander la première unité centrale de traitement (201), **caractérisé en ce que** :
chacune de la première unité centrale de traitement (201) et de la seconde unité centrale de traitement (13) comprend plusieurs hiérarchies de commande respectives qui définissent un état de couplage entre l'appareil d'information d'image (40) et l'unité de module (42) ; et
la seconde unité centrale de traitement (13) de l'unité de module (42) est agencée de façon à transmettre des informations de commande qui correspondent à une couche dans les hiérarchies de commande de la seconde unité centrale de traitement (13) à une couche respective dans les hiérarchies de commande de la première unité centrale de traitement (201) sur la base de l'état de couplage, de façon à commander l'appareil d'information d'image (40).

2. Système selon la revendication 1, dans lequel la seconde unité centrale de traitement (13) de l'unité de module (42) est agencée en outre de façon à transmettre des informations de commande qui correspondent à une couche plus élevée dans les hiérarchies de commande de la seconde unité centrale de traitement (13) à une couche plus basse dans les hiérarchies de commande de la première unité centrale de traitement (201), de façon à commandeur l'appareil d'information d'image (40).

3. Système selon la revendication 1 ou la revendication 2, dans lequel les plusieurs hiérarchies de commande respectives de chacun de l'appareil d'information d'image (40) et de l'unité de module (42) comprennent une couche de système d'exploitation (221, 102), et un transfert de données est exécuté entre les systèmes d'exploitation respectifs (221, 102).

4. Système selon la revendication 1 ou la revendication 2, dans lequel les plusieurs hiérarchies de commande respectives de chacun de l'appareil d'information d'image (40) et de l'unité de module (42) comprennent un logiciel médiateur (222, 112), et un transfert de données est exécuté entre les logiciels médiateurs respectifs (222, 112).

5. Système selon la revendication 1 ou la revendication 2, dans lequel les plusieurs hiérarchies de commande respectives de chacun du corps d'appareil d'information d'image (40) et de l'unité de module (42) comprennent une application (225, 110), et un transfert de données est exécuté entre les applications respectives (225, 110).

6. Système selon la revendication 1 ou la revendication 2, dans lequel les plusieurs hiérarchies de commande respectives de chacun du corps d'appareil d'information d'image (40) et de l'unité de module (42) comprennent un communicateur de communication interprocessus (71, 74), et un transfert de données est exécuté entre les communicateurs de communication interprocessus,

7. Système selon la revendication 1, dans lequel l'unité de module (42) comprend en outre :
des premiers moyens de communication connectés à un premier réseau et destinés à communiquer avec un matériel (310) connecté au premier réseau ,
des seconds moyens de communication connectés à un second réseau et destinés à communiquer avec un matériel (40a, 40b) connecté au second réseau ; et
des moyens destinés à délivrer en sortie une adresse IF dans le premier réseau.

8. Système selon la revendication 7, dans lequel l'unité de module (42) est agencée en outre de façon à lancer un programme (325) qui correspond au matériel (40a, 40b) connecté au second réseau, et à faire en sorte que le programme émule le matériel (40a, 40b) qui correspond à l'adresse TP.

9. Système selon la revendication 8, dans lequel les premiers moyens de communication sont agencés de façon à transmettre l'adresse IP au matériel (310) connecté au premier réseau.

10. Système selon la revendication 8 ou la revendication 9, dans lequel l'unité de module (42) comprend en outre des moyens d'acquisition de relation de correspondance destinés à acquérir une relation de correspondance entre une commande du premier réseau et une commande du selon réseau ; et
dans lequel les premiers moyens de communication sont agencés de façon à recevoir une commande à l'adresse IP transmise en provenance du matériel (310) connecté au premier réseau ;
le programme d'émulation (325) est agencé de façon à utiliser les moyens d'acquisition de relation de correspondance de façon à convertir la commande en une commande dans le second réseau ; et
les seconds moyens de communication sont agencés de Façon à transmettre la commande après la conversion au matériel (40a, 40b) émulé par le programme.

11. Système selon la revendication 10, dans lequel :
les seconds moyens de communication sont agencés en outre de façon à recevoir un résultat d'exécution de commande transmis par le matériel (40a, 40b) connecté au second réseau ;
le programme d'émulation (325) est agencé de façon à utiliser les moyens d'acquisition de relation de correspondance de façon à convertir le résultat d'exécution de commande en un résultat d'exécution de commande dans le premier réseau ; et
les premiers moyens de communication sont agencés de façon à transmettre le résultat d'exécution de commande au matériel (310) qui a transmis la commande et sont connectés au premier réseau.

12. Système selon l'une quelconque des revendications 6 à 11, dans lequel :
le premier réseau est un réseau UPnP ; et
le second réseau est un réseau IEEE 1394.

13. Système selon la revendication 12, dans lequel l'adresse IP est une adresse IP donnée par un serveur DHCP ou une adresse IP acquise dans AutoIP.

14. Support pouvant être lu par un ordinateur qui comprend des instructions qui, quand elles sont exécutées par un appareil approprié, font que l'appareil est configuré en tant qu'appareil d'information d'image ou en tant qu'unité de module dans le système selon l'une quelconque des revendications 1 à 13.
